(19) Europäisches Patentamt
European Patent Office
Office européen des brevets

(11) **EP 4 496 303 A1**

(12) **EUROPEAN PATENT APPLICATION**
published in accordance with Art. 153(4) EPC

(43) Date of publication:
**22.01.2025 Bulletin 2025/04**

(21) Application number: 23770229.5

(22) Date of filing: **15.02.2023**

(51) International Patent Classification (IPC):
**H04N 5/272** (2006.01)          **G06T 3/00** (2024.01)
**H04N 5/66** (2006.01)          **H04N 23/60** (2023.01)

(52) Cooperative Patent Classification (CPC):
**G06T 3/00; H04N 5/272; H04N 5/66; H04N 23/60**

(86) International application number:
**PCT/JP2023/005312**

(87) International publication number:
**WO 2023/176269 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **15.03.2022   JP 2022040687**

(71) Applicant: **Sony Group Corporation
Tokyo 108-0075 (JP)**

(72) Inventor: **TSUCHIYA, Takashi
Tokyo 108-0075 (JP)**

(74) Representative: **2SPL Patentanwälte PartG mbB
Landaubogen 3
81373 München (DE)**

(54)   **INFORMATION PROCESSING DEVICE, INFORMATION PROCESSING METHOD, AND PROGRAM**

(57)     An information processing apparatus includes a correction unit that performs correction of a video by using a correction coefficient generated on the basis of a relative angle between a camera that images the video displayed on a display and the display, and a viewing angle characteristic of the display.

*FIG. 14*

**Description**

TECHNICAL FIELD

The present technology relates to an information processing apparatus, an information processing method, and a program, and particularly relates to a video processing technology performed by the information processing apparatus.

BACKGROUND ART

As an imaging method for producing a video content such as a movie, a technology is known in which a performer performs acting with what is called a green screen and then a background video is combined.
Furthermore, in recent years, instead of green screen imaging, an imaging system has been developed in which, in a studio provided with a large display, a background video is displayed on the display, and a performer performs acting in front thereof, whereby the performer and the background can be imaged, and the imaging system is known as so-called virtual production, in-camera VFX, or light emitting diode (LED) wall virtual production.
Patent Document 1 below discloses a technology of a system that images a performer acting in front of a background video.

CITATION LIST

PATENT DOCUMENT

Patent Document 1: US Patent Application Publication No. 2020/0145644 A

SUMMARY OF THE INVENTION

PROBLEMS TO BE SOLVED BY THE INVENTION

With displaying a background video on a large display and then imaging a performer and the background video with a camera, for example, there is no need to prepare the background video to be combined separately, and the performer and staff can visually understand the scene and perform acting or determine whether the acting is good or bad, which are more advantageous than the green screen imaging.
However, in these videos in which a video and an object such as a performer are imaged, it may occur that a color differs from video data of an original background video. This is because the color and luminance of the background video change depending on the relative angle between the camera and the display.
For example, in the case of a display by an LED panel, the LED has a viewing angle characteristic in which color and luminance shift depending on a viewing angle. For this reason, depending on the position (imaging angle) of the camera with respect to the display, a video is imaged whose color and luminance are shifted from the original color and luminance. Furthermore, in this case, color correction is performed in post-production, whereby the video production efficiency is reduced.
Thus, the present disclosure proposes a technology for obtaining a video having original color and luminance in a case where a video displayed on a display is imaged by a camera.

SOLUTIONS TO PROBLEMS

An information processing apparatus according to the present technology includes a correction unit that performs correction of a video by using a correction coefficient generated on the basis of a relative angle between a camera that images the video displayed on a display and the display, and a viewing angle characteristic of the display.
In a case where a video displayed on a display is imaged by a camera, the video is affected by a viewing angle characteristic in which luminance and color are shifted according to a relative angle between the camera and the display. Thus, correction corresponding to the viewing angle characteristic is performed according to the relative angle at the time of actual imaging.

BRIEF DESCRIPTION OF DRAWINGS

Fig. 1 is an explanatory diagram of an imaging system of an embodiment of the present technology.

Fig. 2 is an explanatory diagram of a background video according to a camera position of the imaging system of the embodiment.

Fig. 3 is an explanatory diagram of a background video according to a camera position of the imaging system of the embodiment.

Fig. 4 is an explanatory diagram of a video content producing step of the embodiment.

Fig. 5 is a block diagram of the imaging system of the embodiment.

Fig. 6 is a flowchart of background video generation by the imaging system of the embodiment.

Fig. 7 is a block diagram of the imaging system using a plurality of cameras of the embodiment.

Fig. 8 is a block diagram of an information processing apparatus of the embodiment.

Fig. 9 is an explanatory diagram of a shift in color and luminance of a background video.

Fig. 10 is a flowchart of processing of measuring a viewing angle characteristic according to the embodiment.

Fig. 11 is an explanatory diagram of measurement of the viewing angle characteristic according to the embodiment.

Fig. 12 is a flowchart of processing of measuring the viewing angle characteristic according to the embodiment.

Fig. 13 is a block diagram of a configuration example of a first embodiment.

Fig. 14 is a block diagram of a configuration of a correction unit of the first, second, and third embodiments.

Fig. 15 is an explanatory diagram of a method of obtaining a relative angle of the embodiment.

Fig. 16 is an explanatory diagram of the method of obtaining the relative angle of the embodiment.

Fig. 17 is an explanatory diagram of a correction coefficient of the embodiment.

Fig. 18 is a flowchart of correction processing of the embodiment.

Fig. 19 is a block diagram of a configuration example of a second embodiment.

Fig. 20 is a block diagram of a configuration example of a third embodiment.

Fig. 21 is a block diagram of a configuration example of a fourth embodiment.

Fig. 22 is a block diagram of a configuration example of a fifth embodiment.

Fig. 23 is an explanatory diagram of an imaged video of the embodiment.

Fig. 24 is an explanatory diagram of a mask used in the embodiment.

Fig. 25 is an explanatory diagram of a wavelength range of a camera used in the embodiment.

Fig. 26 is an explanatory diagram of a configuration example of a camera of the embodiment.

Fig. 27 is an explanatory diagram in a case where a display is a curved surface in the embodiment.

## MODE FOR CARRYING OUT THE INVENTION

Hereinafter, embodiments will be described in the following order.

<1. Imaging system and content production>
<2. Configuration of information processing apparatus>
<3. Measurement of shift in color and luminance and viewing angle characteristic>
<4. First embodiment>
<5. Second embodiment>
<6. Third embodiment>
<7. Fourth embodiment>
<8. Fifth embodiment>
<9. Coping with curved surface panel>
<10. Summary and modification examples>

Note that, in the present disclosure, "video" or "image" includes both a still image and a moving image. Furthermore, "video" does not only refer to a state of being displayed on a display, but video data that is not displayed on the display may be comprehensively referred to as "video". For example, in the description of the imaging system and content production, the term "video" is comprehensively used. However, in the case of referring to video data rather than a displayed video for the sake of explanation regarding video correction processing, the notation "video data" is used to distinguish them from each other.

<1. Imaging system and video content production>

A description will be given of an imaging system to which the technology of the present disclosure can be applied and production of a video content.

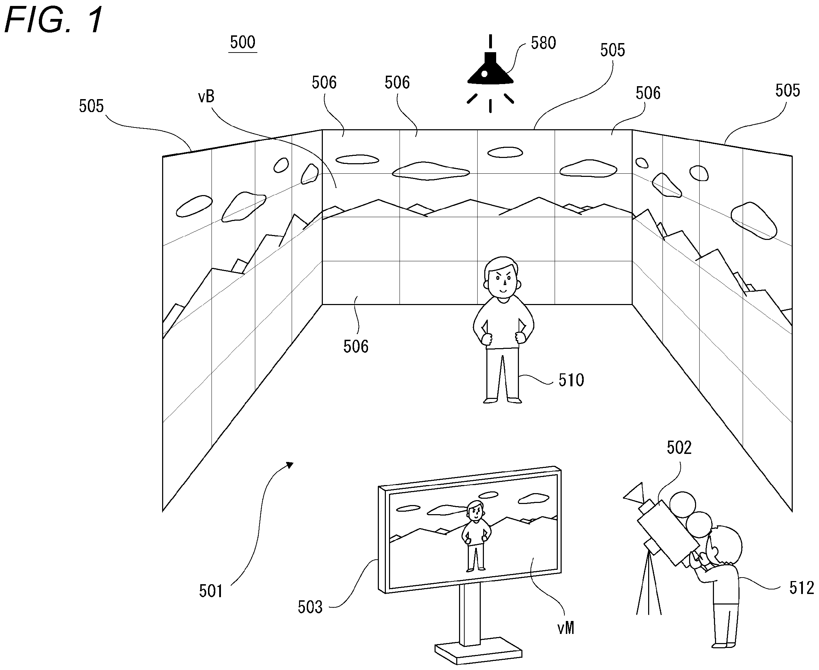

Fig. 1 schematically illustrates an imaging system 500. The imaging system 500 is a system that performs imaging as virtual production, and some of equipment arranged in an imaging studio is illustrated in the drawing.

In the imaging studio, a performance area 501 is provided in which a performer 510 performs a performance such as acting and the like. Large display apparatuses are arranged on at least a back surface, left and right side surfaces, and an upper surface of the performance area 501. Although the device type of the display apparatus is not limited, the drawing illustrates an example in which an LED wall 505 is used as an example of the large display apparatus.

One LED wall 505 forms a large panel by vertically and horizontally connecting and arranging a plurality of LED panels 506. The size of the LED wall 505 is not particularly limited, but is only required to be a size that is necessary or sufficient as a size for displaying the background when the performer 510 is imaged.

A necessary number of lights 580 are arranged at a necessary position such as above or on the side of the performance area 501 to light the performance area 501.

Near the performance area 501, for example, a camera 502 is disposed for imaging a video content such as a movie. A camera operator 512 can move the position of the camera 502, and can perform operation of an imaging direction, an angle of view, or the like. Of course, it is also conceivable that movement, angle of view operation, or the like of the camera 502 is performed by remote operation. Furthermore, the camera 502 may automatically or autonomously move or change the angle of view. For this purpose, the camera 502 may be mounted on a camera platform or a mobile body.

The camera 502 collectively images the performer 510 in the performance area 501 and a video displayed on the LED wall 505. For example, by displaying a scene as a background video vB on the LED wall 505, it is possible to image a video similar to that in a case where the performer 510 actually exists and performs acting at a place of the scene.

An output monitor 503 is disposed near the performance area 501. The video imaged by the camera 502 is displayed on the output monitor 503 in real time as a monitor video vM. Thus, a director and staff who produce a video content can confirm the imaged video.

As described above, the imaging system 500 that images the performance by the performer 510 with the background of the LED wall 505 in the imaging studio has various advantages as compared with green screen imaging.

For example, in the case of the green screen imaging, it is difficult for the performer to imagine the background and the situation of the scene, which may affect the acting. Whereas, by displaying the background video vB, it becomes easy for the performer 510 to perform acting, and the quality of acting is improved. Furthermore, it is easy for the director and other staff to determine whether or not the acting by the performer 510 matches the background and the situation of the scene.

Furthermore, post-production after imaging is more efficient than that in the case of the green screen imaging. This is because a so-called chroma key composition may be unnecessary or color correction or reflection composition may be unnecessary. Furthermore, even in a case where the chroma key composition is required at the time of imaging, a background screen does not need to be added, which is also helpful to improve efficiency.

In the case of the green screen imaging, a green hue increases on the performer's body, dress, and objects, and thus correction thereof is necessary. Furthermore, in the case of the green screen imaging, in a case where there is an object in which a surrounding scene is reflected, such as glass, a mirror, or a snowdome, it is necessary to generate and combine an image of the reflection, but this is troublesome work.

On the other hand, in the case of imaging by the imaging system 500 in Fig. 1, the green hue does not increase, and thus the correction is unnecessary. Furthermore, by displaying the background video vB, the reflection on the actual article such as glass is naturally obtained and imaged, and thus, it is also unnecessary to combine a reflection video.

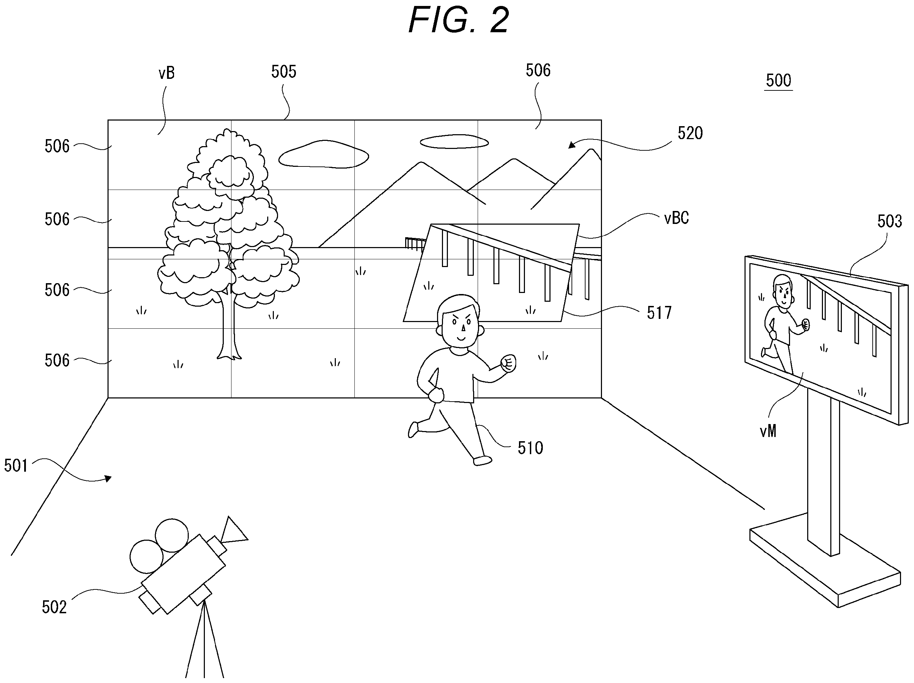

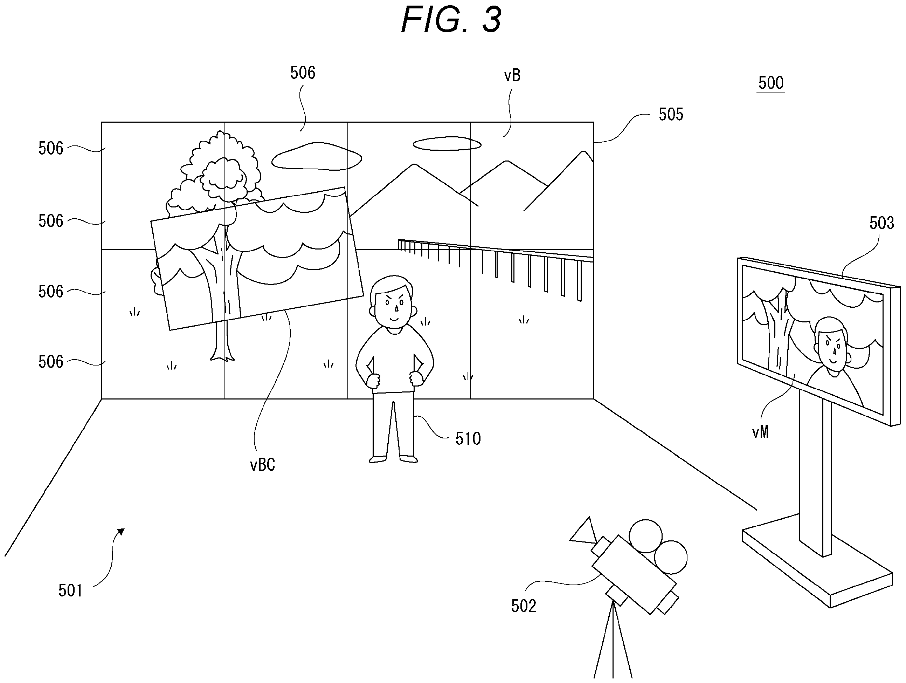

Here, the background video vB will be described with reference to Figs. 2 and 3. Even if the background video vB is displayed on the LED wall 505 and imaged together with the performer 510, the background of the imaged video is unnatural only by simply displaying the background video vB. This is because a background that actually is three-dimensional and has depth is used as the background video vB in a planar manner.

For example, the camera 502 can image the performer 510 in the performance area 501 from various directions, and can also perform zoom operation. The performer 510 also does not stop at one place. As a result, the actual appearance of the background of the performer 510 should change according to the position, the imaging direction, the angle of view, or the like of the camera 502, but such a change cannot be obtained in the background video vB as a planar video. Thus, the background video vB is changed so that the background is similar to the actual appearance including parallax.

Fig. 2 illustrates a state in which the camera 502 is imaging the performer 510 from a position on the left side of the drawing, and Fig. 3 illustrates a state in which the camera 502 is imaging the performer 510 from a position on the right side of the drawing. In each drawing, an imaging region video vBC is illustrated in the background video vB.

Note that a portion of the background video vB excluding the imaging region video vBC is referred to as an "outer frustum", and the imaging region video vBC is referred to as an "inner frustum".

The background video vB described here refers to the entire video displayed as the background including the imaging region video vBC (inner frustum).

A range of the imaging region video vBC (inner frustum) corresponds to a range actually imaged by the camera 502 in the display surface of the LED wall 505. Then, the imaging region video vBC is a video that is transformed so as to express a scene that is actually viewed when the position of the camera 502 is set as a viewpoint according to the position, the imaging direction, the angle of view, or the like of the camera 502.

Specifically, 3D background data is prepared that is a three-dimensions (3D) model as a background, and the imaging region video vBC is rendered on the basis of the viewpoint position of the camera 502 sequentially in real time with respect to the 3D background data.

Note that the range of the imaging region video vBC is actually a range slightly wider than the range imaged by the camera 502 at the time point. This is to prevent the video of the outer frustum from being reflected due to a drawing delay and to avoid the influence of the diffracted light from the video of the outer frustum when the range of imaging is slightly changed by panning, tilting, zooming, or the like of the camera 502.

The video of the imaging region video vBC rendered in real time in this manner is combined with the video of the outer frustum. The video of the outer frustum used in the background video vB is rendered in advance on the basis of the 3D background data, and a video is incorporated as the imaging region video vBC rendered in real time into a part of the video of the outer frustum to generate the entire background video vB.

As a result, even when the camera 502 is moved back and forth, or left and right, or zoom operation is performed, the background of the range imaged together with the performer 510 is imaged as a video according to the viewpoint position change accompanying the actual movement of the camera 502.

As illustrated in Figs. 2 and 3, the monitor video vM including the performer 510 and the background is displayed on the output monitor 503, and this is the imaged video. The background of the monitor video vM is the imaging region video vBC. That is, the background included in the imaged video is a real-time rendered video.

As described above, in the imaging system 500 of the embodiment, the background video vB including the imaging region video vBC is changed in real time so that not only the background video vB is simply displayed in a planar manner but also a video can be imaged similar to that in a case where imaging on location is actually performed.

Note that the processing load of the system is also reduced by rendering in real time only the imaging region video vBC as a range reflected by the camera 502 instead of the entire background video vB displayed on the LED wall 505.

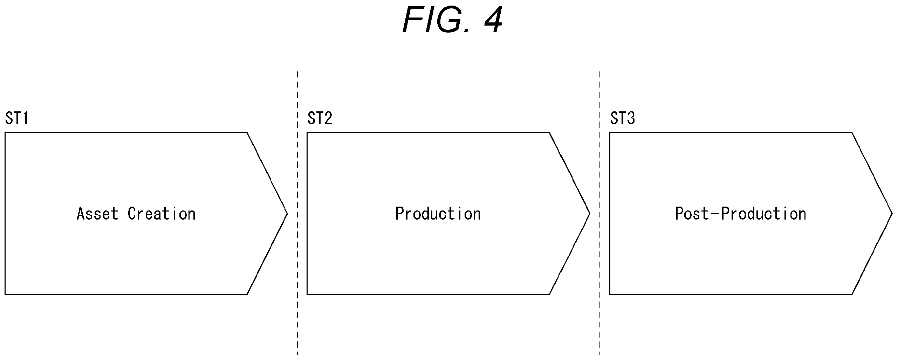

Here, a description will be given of a video content producing step as virtual production in which imaging is performed by the imaging system 500. As illustrated in Fig. 4, the video content producing step is roughly divided into three stages. The stages are asset creation ST1, production ST2, and post-production ST3.

The asset creation ST1 is a step of producing 3D background data for displaying the background video vB. As described above, the background video vB is generated by performing rendering in real time using the 3D background data at the time of imaging. For this purpose, the 3D background data as a 3D model is produced in advance.

Examples of a method of producing the 3D background data include full computer graphics (CG), point cloud data scanning, and photogrammetry.

The full CG is a method of producing a 3D model with computer graphics. Among the three methods, the method requires the most man-hours and time, but is preferably used in a case where an unrealistic video, a video that is difficult to image in practice, or the like is desired to be the background video vB.

The point cloud data scanning is a method of generating a 3D model based on the point cloud data by performing distance measurement from a certain position using, for example, LiDAR, imaging an image of 360 degrees from the same position with a camera, and placing color data imaged by the camera on a point measured by LiDAR. Compared with the full CG, the 3D model can be produced in a short time. Furthermore, it is easy to produce a 3D model with higher definition than that by photogrammetry.

The photogrammetry is a photogrammetry technology for analyzing parallax information from two-dimensional images obtained by imaging a material body from a plurality of viewpoints to obtain dimensions and shapes. 3D model production can be performed in a short time.

Note that point cloud information acquired by LiDAR may be used in 3D data generation by the photogrammetry.

In the asset creation ST1, a 3D model to be 3D background data is produced by using these methods, for example. Of course, the above methods may be used in combination. For example, a part of the 3D model produced by the point cloud data scanning or photogrammetry is produced by CG and combined.

The production ST2 is a step of performing imaging in the imaging studio as illustrated in Fig. 1. Element technologies in this case include real-time rendering, background display, camera tracking, lighting control, and the like.

The real-time rendering is rendering processing for obtaining the imaging region video vBC at each time point (each frame of the background video vB) as described with reference to Figs. 2 and 3. This is to render the 3D background data produced in the asset creation ST1 from a viewpoint according to the position or the like of the camera 502 at each time point.

In this manner, the real-time rendering is performed to generate the background video vB of each frame including the imaging region video vBC, and the background video vB is displayed on the LED wall 505.

The camera tracking is performed to obtain imaging information by the camera 502, and tracks position information, an imaging direction, an angle of view, and the like of the camera 502 at each time point. By providing the imaging information including these to a rendering engine in association with each frame, real-time rendering according to the viewpoint position and the like of the camera 502 can be executed.

The imaging information is information linked with or associated with a video as metadata.

It is assumed that the imaging information includes position information, a direction of the camera, an angle of view, a focal length, an F-number (aperture value), a shutter speed, and lens information regarding the camera 502 at each frame timing.

The lighting control is to control the state of lighting in the imaging system 500, and specifically, to control the amount of light, emission color, lighting direction, and the like of the light 580. For example, the lighting control is performed according to time setting, place setting, and the like of a scene to be imaged.

The post-production ST3 indicates various types of processing performed after imaging. For example, video correction, video adjustment, clip editing, video effect, and the like are performed.

As the video correction, color gamut conversion, color matching between cameras and materials, and the like may be performed.

As the video adjustment, color adjustment, luminance adjustment, contrast adjustment, and the like may be performed.

As the clip editing, cutting of clips, adjustment of order, adjustment of a time length, and the like may be performed as the clip editing.

As the video effect, combining of a CG video, a special effect video, or the like may be performed.

Next, a configuration of the imaging system 500 used in the production ST2 will be described.

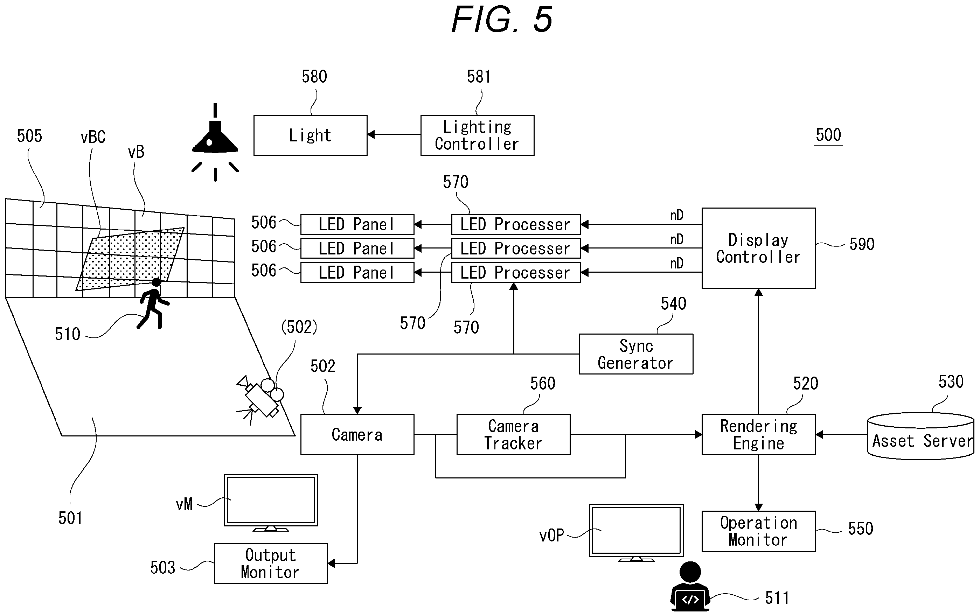

Fig. 5 is a block diagram illustrating a configuration of the imaging system 500 whose outline has been described with reference to Figs. 1, 2, and 3.

The imaging system 500 illustrated in Fig. 5 includes the above-described LED wall 505 including the plurality of LED panels 506, the camera 502, the output monitor 503, and the light 580. As illustrated in Fig. 5, the imaging system 500 further includes a rendering engine 520, an asset server 530, a sync generator 540, an operation monitor 550, a camera tracker 560, LED processors 570, a lighting controller 581, and a display controller 590.

The LED processors 570 are provided respectively corresponding to the LED panels 506, and perform video display driving of the corresponding LED panels 506.

The sync generator 540 generates a synchronization signal for synchronizing a frame timing of a display video by each of the LED panels 506 and a frame timing of imaging by the camera 502, and supplies the synchronization signal to each of the LED processors 570 and the camera 502. However, this does not prevent output from the sync generator 540 from being supplied to the rendering engine 520.

The camera tracker 560 generates imaging information by the camera 502 at each frame timing and supplies the imaging information to the rendering engine 520. For example, the camera tracker 560 detects the position information on the camera 502 relative to the position of the LED wall 505 or a predetermined reference position and the imaging direction of the camera 502 as one of pieces of imaging information, and supplies them to the rendering engine 520.

As a specific detection method by the camera tracker 560, there is a method of randomly arranging reflectors on the ceiling and detecting a position from reflected light of infrared light emitted from the camera 502 side to the reflectors. Furthermore, as the detection method, there is also a method of estimating a self position of the camera 502 with information from a gyro mounted on the camera platform of the camera 502 or the body of the camera 502, or by image recognition of the imaged video by the camera 502.

Furthermore, the angle of view, the focal length, the F-number, the shutter speed, the lens information, or the like may be supplied from the camera 502 to the rendering engine 520 as the imaging information.

The asset server 530 is a server that can store the 3D model produced in the asset creation ST1, that is, 3D background data on a recording medium and read the 3D model, as necessary. That is, the asset server 530 functions as a data base (DB) of 3D background data.

The rendering engine 520 performs processing of generating the background video vB to be displayed on the LED wall 505. For this purpose, the rendering engine 520 reads necessary 3D background data from the asset server 530. Then, the rendering engine 520 generates a video of the outer frustum used in the background video vB as a video obtained by rendering the 3D background data in a form of being viewed from spatial coordinates designated in advance.

Furthermore, as processing for each frame, the rendering engine 520 specifies the viewpoint position and the like with respect to the 3D background data by using the imaging information supplied from the camera tracker 560 or the camera 502, and renders the imaging region video vBC (inner frustum).

Moreover, the rendering engine 520 combines the imaging region video vBC rendered for each frame with the outer frustum generated in advance to generate the background video vB as the video data of one frame. Then, the rendering engine 520 transmits the generated video data of one frame to the display controller 590.

The display controller 590 generates divided video signals nD obtained by dividing the video data of one frame into video portions to be displayed on the respective LED panels 506, and transmits the divided video signals nD to the respective LED panels 506. At this time, the display controller 590 may perform calibration according to individual differences, manufacturing errors, and the like of color development and the like between display units.

Note that the display controller 590 may not be provided, and the rendering engine 520 may perform these types of processing. That is, the rendering engine 520 may generate the divided video signals nD, perform calibration, and transmit the divided video signals nD to the respective LED panels 506.

The LED processors 570 respectively drive the LED panels 506 on the basis of the received divided video signals nD, whereby the entire background video vB is displayed on the LED wall 505. The background video vB includes the imaging region video vBC rendered according to the position or the like of the camera 502 at that time point.

The camera 502 can image the performance by the performer 510 including the background video vB displayed on the LED wall 505 in this manner. The video obtained by imaging by the camera 502 is recorded on a recording medium in the camera 502 or an external recording apparatus (not illustrated), and is supplied to the output monitor 503 in real time and displayed as the monitor video vM.

The operation monitor 550 displays an operation image vOP for controlling the rendering engine 520. An engineer 511 can perform necessary setting and operation for rendering the background video vB while viewing the operation image vOP.

The lighting controller 581 controls emission intensity, emission color, irradiation direction, and the like of the light 580. For example, the lighting controller 581 may control the light 580 asynchronously with the rendering engine 520, or may perform control in synchronization with the imaging information and the rendering processing. For that purpose, the lighting controller 581 may perform light emission control in accordance with an instruction from the rendering engine 520, a master controller (not illustrated), or the like.

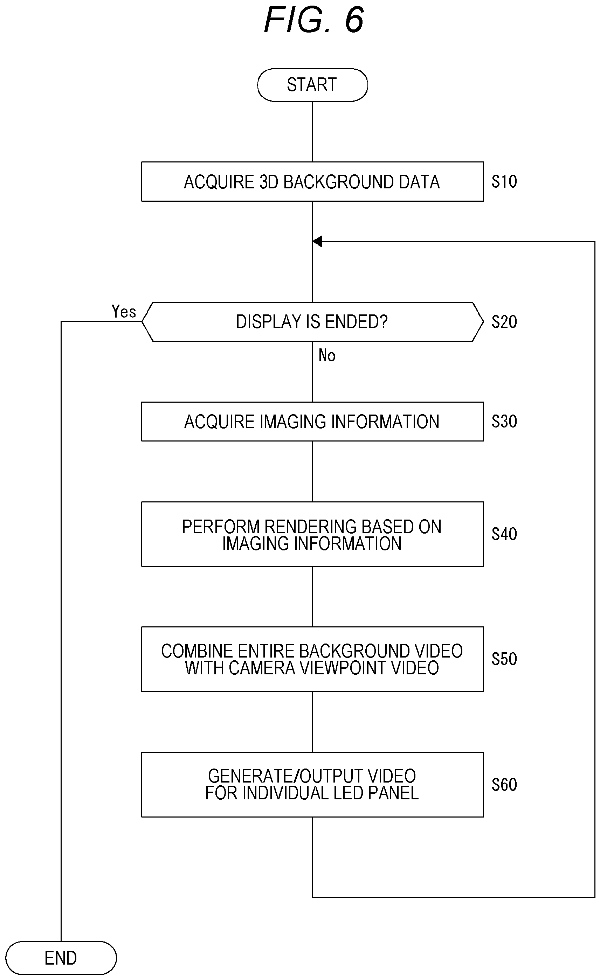

Fig. 6 illustrates an example of processing by the rendering engine 520 in the imaging system 500 having such a configuration.

In step S10, the rendering engine 520 reads the 3D background data to be used this time from the asset server 530, and deploys the 3D background data to an internal work area.

Then, a video used as the outer frustum is generated.

Thereafter, the rendering engine 520 repeats the processing from step S30 to step S60 at each frame timing of the background video vB until it is determined in step S20 that the display of the background video vB based on the read 3D background data is ended.

In step S30, the rendering engine 520 acquires the imaging information from the camera tracker 560 or the camera 502. As a result, the position and state of the camera 502 to be reflected in the current frame are confirmed.

In step S40, the rendering engine 520 performs rendering on the basis of the imaging information. That is, the viewpoint position with respect to the 3D background data is specified on the basis of the position, the imaging direction, the angle of view, or the like of the camera 502 to be reflected in the current frame, and rendering is performed. At this time, video processing reflecting the focal length, the F-number, the shutter speed, the lens information, or the like can also be performed. By this rendering, video data as the imaging region video vBC can be obtained.

In step S50, the rendering engine 520 performs processing of combining the outer frustum as the entire background video with the video reflecting the viewpoint position of the camera 502, that is, the imaging region video vBC. For example, the processing is to combine a video generated by reflecting the viewpoint of the camera 502 with a video of the entire background rendered at a specific reference viewpoint. As a result, the background video vB of one frame displayed on the LED wall 505, that is, the background video vB including the imaging region video vBC is generated.

The processing in step S60 is performed by the rendering engine 520 or the display controller 590. In step S60, the rendering engine 520 or the display controller 590 generates the divided video signals nD obtained by dividing the background video vB of one frame into videos to be displayed on the individual LED panels 506. Calibration may be performed. Then, the divided video signals nD are transmitted to the LED processors 570, respectively.

Through the above processing, the background video vB including the imaging region video vBC imaged by the camera 502 is displayed on the LED wall 505 at each frame timing.

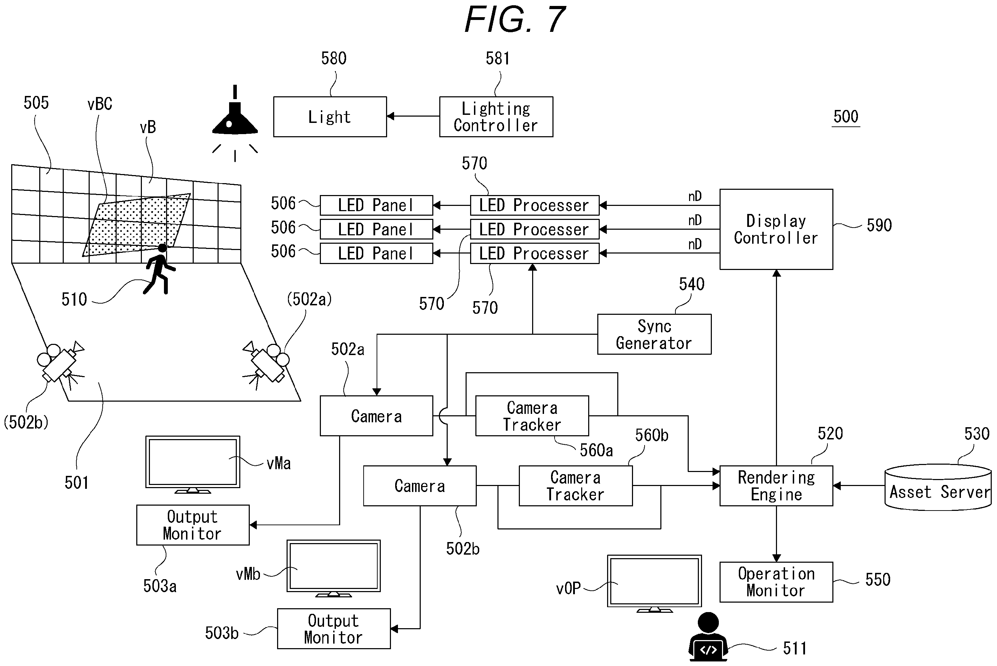

By the way, only one camera 502 is illustrated in Fig. 5, but imaging can be performed by a plurality of cameras 502. Fig. 7 illustrates a configuration example in a case where a plurality of cameras 502a and 502b is used. The cameras 502a and 502b are enabled to independently perform imaging in the performance area 501. Furthermore, synchronization between the cameras 502a and 502b and the LED processors 570 is maintained by the sync generator 540.

Output monitors 503a and 503b are provided corresponding to the cameras 502a and 502b, respectively, and are configured to display the videos imaged by the corresponding cameras 502a and 502b as monitor videos vMa and vMb, respectively.

Furthermore, camera trackers 560a and 560b are provided corresponding to the cameras 502a and 502b, respectively, and detect positions and imaging directions of the corresponding cameras 502a and 502b, respectively. The imaging information from the camera 502a and the camera tracker 560a and the imaging information from the camera 502b and the camera tracker 560b are transmitted to the rendering engine 520.

The rendering engine 520 can perform rendering to obtain the background video vB of each frame by using the imaging information of either the camera 502a side or the camera 502b side.

Note that although Fig. 7 illustrates an example in which two cameras 502a and 502b are used, it is also possible to perform imaging by using three or more cameras 502.

However, in a case where the plurality of cameras 502 is used, there is a circumstance that the imaging region videos vBC corresponding to the respective cameras 502 interfere with each other. For example, in the example in which the two cameras 502a and 502b are used as illustrated in Fig. 7, the imaging region video vBC corresponding to the camera 502a is illustrated, but in a case where the video by the camera 502b is used, the imaging region video vBC corresponding to the camera 502b is also necessary. When the imaging region videos vBC corresponding to the respective cameras 502a and 502b are simply displayed, they interfere with each other. For this reason, it is necessary to contrive the display of the imaging region video vBC.

<2. Configuration of information processing apparatus>

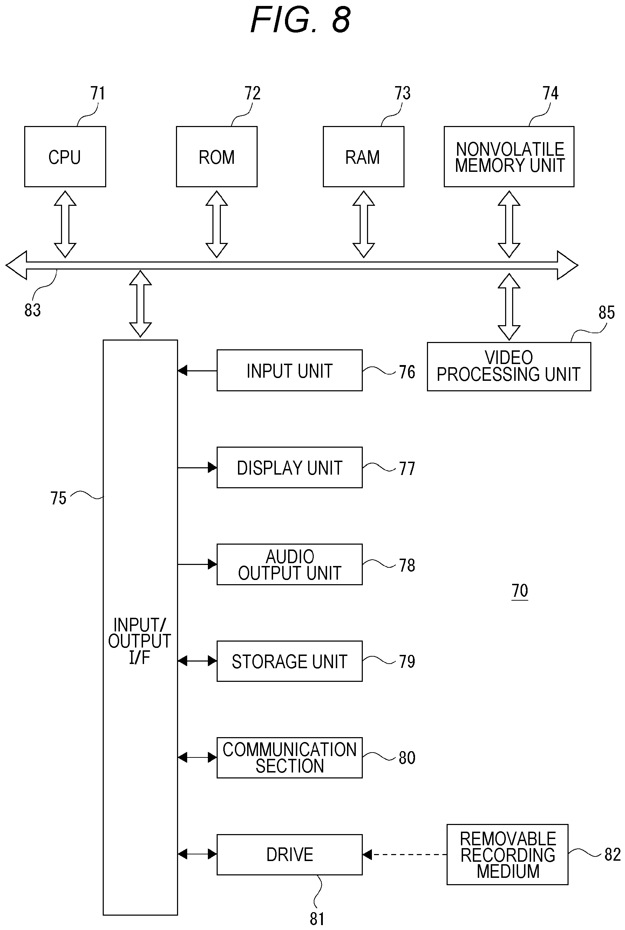

Next, with reference to Fig. 8, a description will be given of a configuration example of an information processing apparatus 70 that can be used in the asset creation ST1, the production ST2, and the post-production ST3.

The information processing apparatus 70 is an apparatus capable of performing information processing, particularly video processing, such as a computer device. Specifically, a personal computer, a workstation, a portable terminal apparatus such as a smartphone or a tablet, a video editing apparatus, and the like are assumed as the information processing apparatus 70. Furthermore, the information processing apparatus 70 may be a computer apparatus configured as a server apparatus or a calculation apparatus in cloud computing.

In the case of the present embodiment, specifically, the information processing apparatus 70 can function as a 3D model production apparatus that produces a 3D model in the asset creation ST1.

Furthermore, the information processing apparatus 70 can function as the rendering engine 520 constituting the imaging system 500 used in the production ST2.

Moreover, the information processing apparatus 70 can also function as the asset server 530.

Furthermore, the information processing apparatus 70 can also function as a video editing apparatus that performs various types of video processing in the post-production ST3.

Furthermore, the information processing apparatus 70 can function as the rendering engine 520 having a function as a correction unit 11 described later. Moreover, the information processing apparatus 70 can include the correction unit 11 as a separate device from the rendering engine 520.

A CPU 71 of the information processing apparatus 70 illustrated in Fig. 8 executes various types of processing in accordance with a program stored in a nonvolatile memory unit 74 such as a ROM 72 or, for example, an electrically erasable programmable read-only memory (EEP-ROM), or a program loaded from a storage unit 79 to a RAM 73. The RAM 73 also appropriately stores data and the like necessary for the CPU 71 to execute the various types of processing.

A video processing unit 85 is configured as a processor that performs various types of video processing. For example, the processor is a processor capable of performing any one of 3D model generation processing, rendering, DB processing, video editing processing, correction processing as the correction unit 11 described later, and the like, or a plurality of types of processing.

The video processing unit 85 can be implemented by, for example, a CPU, a graphics processing unit (GPU), general-purpose computing on graphics processing units (GPGPU), an artificial intelligence (AI) processor, or the like that is separate from the CPU 71.

Note that the video processing unit 85 may be provided as a function in the CPU 71.

The CPU 71, the ROM 72, the RAM 73, the nonvolatile memory unit 74, and the video processing unit 85 are connected to one another via a bus 83. An input/output interface 75 is also connected to the bus 83.

An input unit 76 including an operation element or an operation device is connected to the input/output interface 75. As the input unit 76, for example, various operation elements and operation devices are assumed including a keyboard, a mouse, a key, a dial, a touch panel, a touchpad, a remote controller, and the like.

Operation by a user is detected by the input unit 76, and a signal according to the input operation is interpreted by the CPU 71.

A microphone is also assumed as the input unit 76. It is also possible to input voice uttered by the user as operation information.

Furthermore, a display unit 77 including a liquid crystal display (LCD), an organic electro-luminescence (EL) panel, or the like, and an audio output unit 78 including a speaker or the like are integrally or separately connected to the input/output interface 75.

The display unit 77 is a display unit that performs various displays, and includes, for example, a display device provided in a housing of the information processing apparatus 70, a separate display device connected to the information processing apparatus 70, and the like.

The display unit 77 performs display of various images, operation menus, icons, messages, and the like, that is, display as a graphical user interface (GUI), on a display screen on the basis of an instruction from the CPU 71.

In some cases, the storage unit 79 including a hard disk drive (HDD), a solid-state memory, or the like or a communication unit 80 is connected to the input/output interface 75.

The storage unit 79 can store various data and programs. A DB can also be configured in the storage unit 79.

For example, in a case where the information processing apparatus 70 functions as the asset server 530, a DB that stores a 3D background data group can be constructed using the storage unit 79.

The communication unit 80 performs communication processing via a transmission line such as the Internet, wired/wireless communication with various devices such as an external DB, an editing apparatus, and an information processing apparatus, and communication by bus communication and the like.

For example, in a case where the information processing apparatus 70 functions as the rendering engine 520, it is possible to access the DB as the asset server 530 with the communication unit 80, and receive the imaging information from the camera 502 or the camera tracker 560.

Furthermore, also in the case of the information processing apparatus 70 used in the post-production ST3, it is also possible to access the DB as the asset server 530 with the communication unit 80.

A drive 81 is also connected to the input/output interface 75, as necessary, and a removable recording medium 82 such as a magnetic disk, an optical disk, a magneto-optical disk, a semiconductor memory, or the like is appropriately mounted.

It is possible to read video data, various computer programs, and the like from the removable recording medium 82 with the drive 81. The read data is stored in the storage unit 79, and video and audio included in the data are output by the display unit 77 and the audio output unit 78. Furthermore, the computer program and the like read from the removable recording medium 82 are installed in the storage unit 79, as necessary.

In the information processing apparatus 70, for example, software for the processing in the present embodiment can be installed via network communication by the communication unit 80 or the removable recording medium 82. Alternatively, the software may be stored in advance in the ROM 72, the storage unit 79, or the like.

<3. Measurement of shift in color and luminance and viewing angle characteristic>

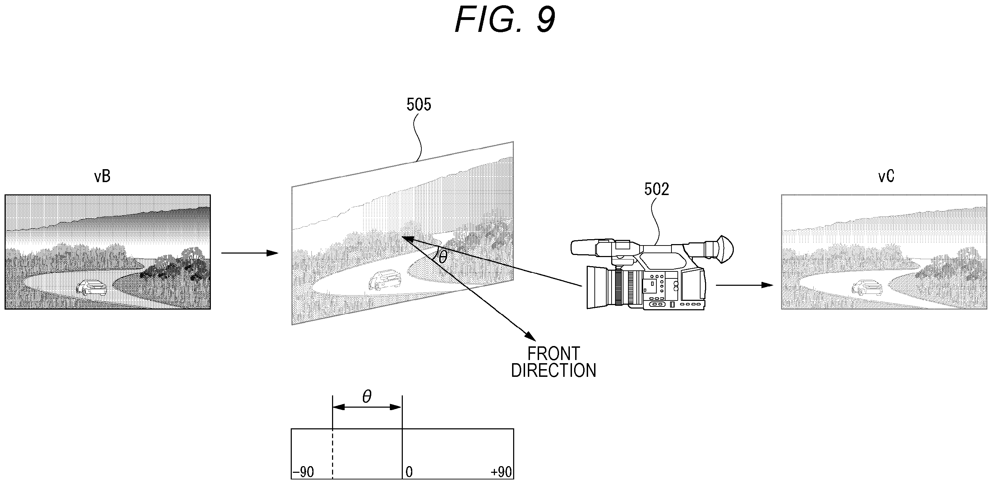

With reference to Fig. 9, a description will be given of a shift in color and luminance due to a viewing angle characteristic of the LED wall 505 including the plurality of LED panels 506.

Fig. 9 illustrates a state in which the background video vB is displayed on the LED wall 505. At this time, it is assumed that the camera 502 performs imaging from an oblique direction having a relative angle $\theta$ with respect to the LED wall 505.

Note that a front direction illustrated is a vertical direction to a panel plane of the LED wall 505, and the relative angle is 0 degrees in a state where the camera 502 is present in the front direction, that is, in a case where an angle between an optical axis of the camera 502 and the panel plane is 90 degrees.

The position of the camera 502 can range from -90 degrees to +90 degrees around the relative angle $\theta$ = 0 degrees in the horizontal direction, for example. The relative angle $\theta$ = -90 degrees and the relative angle $\theta$ = +90 degrees are, for example, states where imaging is performed from lateral directions in just left and just right of the LED wall 505.

When the camera 502 performs imaging at the position and direction having the relative angle $\theta$ in this manner, in an imaged video vC, the color and luminance of the video deviate from those of the original background video vB, and the video does not become a video originally intended by the producer.

This is because the LED has a viewing angle characteristic in which the color and luminance shift depending on the viewing angle. That is, the luminance of each LED in the LED panel 506 changes between when viewed from the vertical direction (that is, right in front) and when viewed from the oblique direction. As a result, when the imaging position is changed from right in front, the background video vB reflected in the imaged video vC is shifted from the original luminance.

In the case of a color LED panel, each of a red (R) LED, a green (G) LED, and a blue (B) LED emits light, but shift characteristics are different for respective colors of R, G, and B. For example, an amount of luminance shift of the R LED, an amount of luminance shift of the G LED, and an amount of luminance shift of the B LED at a certain relative angle $\theta$ are different from each other. As a result, the ratio of the luminance levels of the respective colors changes between when imaging is performed from the front and when imaging is performed from the oblique direction, and thus, the hues also differs.

As a result, as schematically illustrated in Fig. 9, the original background video vB and the imaged video vC of the background video vB imaged by the camera 502 have the color and luminance changed according to the relative angle $\theta$.

Thus, in the present embodiment, in a case where the background video vB displayed on the LED wall 505 is imaged by the camera 502, the video is corrected using a correction coefficient generated on the basis of the relative angle between the camera 502 and the LED wall 505 (LED panel 506) and the viewing angle characteristic of the LED wall 505 (LED panel 506). As a result, a video is obtained having the same color and luminance as those of the original background video vB in the imaged video vC.

In order to perform such correction, in the present embodiment, the viewing angle characteristic of the LED wall 505 is measured in advance.

The viewing angle characteristic here is a characteristic of a relationship of an amount of shift in color and luminance with respect to the relative angle of the camera 502 to the LED wall 505, and more specifically, may be considered as a change characteristic of the luminance level for each relative angle of each of R, G, and B colors of the LED panel 506.

Note that, although Fig. 9 illustrates the angle θ in the horizontal direction with respect to the front direction of the panel surface for simplification of description, there is actually a viewing angle characteristic due to an angle φ in the vertical direction.

Thus, a relationship between the viewing angle and an amount of shift in color and luminance is measured in advance from various positions in the horizontal direction and the vertical direction. For example, the measurement may be performed at the time of product design of the LED wall 505 and the LED panel 506, or may be performed at an imaging preparation stage of the production (ST2) in Fig. 4.

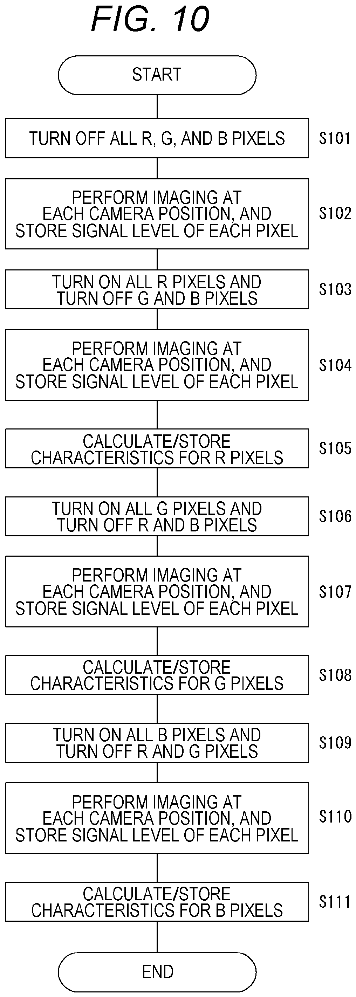

Fig. 10 illustrates a procedure of measurement of the viewing angle characteristic. Fig. 10 is a processing example in a case where a color LED panel is assumed as the LED panel 506. For example, in the imaging preparation stage, the measurement is performed using the camera 502 disposed in the performance area 501 in front of the LED wall 505. Note that control of the LED wall 505 for measurement and processing on the imaged video vC by the camera 502 can be performed by various information processing apparatuses. For example, it is possible to use a personal computer or the like operated by staff, but in the following description, it is assumed that the rendering engine 520 performs control.

In step S101, the rendering engine 520 performs control to a state in which all pixels of each LED panel 506 in the LED wall 505 are turned off.

In step S102, imaging is executed while the position of the camera 502 is sequentially changed by manual or automatic control by staff. At this time, the rendering engine 520 takes in the imaged video vC at each position of the camera 502.

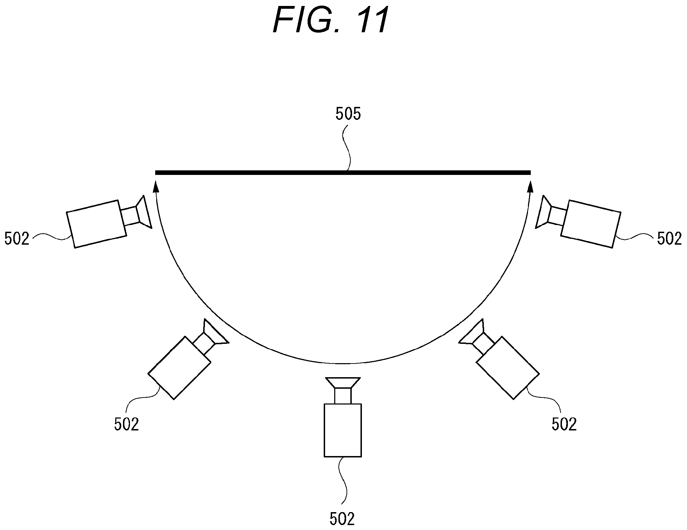

For example, as illustrated in Fig. 11, the imaged video vC at each position is taken in while the position of the camera 502 is changed to each position with respect to the LED wall 505. That is, the imaging is executed in a state of various relative angles, and the rendering engine 520 stores video data of the imaged video vC according to each relative angle. Although five camera positions are illustrated in Fig. 11, this is a schematic diagram, and it is preferable to execute imaging at a larger number of positions (states of a larger number of relative angles).

By the operation in step S102, the rendering engine 520 can store a signal level (pixel value) of each pixel of one frame of the video data in a state where the LED wall 505 is fully turned off for each relative angle.

In step S103, the rendering engine 520 performs control to a state in which R pixels of each LED panel 506 in the LED wall 505 are all turned on, and G pixels and B pixels are turned off.

Then, in step S104, imaging is executed while the position of the camera 502 is sequentially changed, and the rendering engine 520 stores the video data of the imaged video vC by the camera 502 at each relative angle as in step S102.

In step S105, the rendering engine 520 calculates and stores the viewing angle characteristic for the R pixel of the LED wall 505.

In this case, the rendering engine 520 calculates (level when pixels are all turned on) - (level when pixels are turned off) of R light of each pixel, for each relative angle θ, by using the video data obtained in steps S102 and S103.

For example, in a frame of the video data at the relative angle θ = +45 degrees when R pixels are all turned on, and a frame of the video data when the pixels are all turned off, the difference is obtained for each pixel, and the result is stored as an R luminance at the relative angle θ = +45 degrees.

This is performed for each position imaged as illustrated in Fig. 11, whereby the R luminance of each position (relative angle) is stored.

The difference in R luminance level from the case of θ = 0 degrees at each relative angle is an amount of shift in R luminance at the relative angle.

Note that a reason why the difference is obtained for each pixel in the frame is to accurately detect the amount of shift in consideration of the fact that a relative angle difference occurs even for each pixel and the amount of shift in the luminance is different.

However, the calculation is not necessarily performed for each pixel. Most roughly, for example, for one relative angle θ, (level when pixels are all turned on) - (level when pixels are turned off) may be calculated by using an average luminance value in one frame, or one frame may be divided into several pixel blocks and the calculation may be performed for each pixel block. As the size of the pixel block is reduced, the amount of shift is obtained more precisely.

The R luminance level for each relative angle θ is obtained and stored in this manner, whereby the viewing angle characteristics for the R pixels can be measured.

In steps S106, S107, and S108, similar processing is performed on the G pixels.

In step S106, the rendering engine 520 performs control to a state in which G pixels of each LED panel 506 in the LED wall 505 are all turned on, and R pixels and B pixels are turned off. Then, in step S107, imaging is executed while the position of the camera 502 is sequentially changed, and the rendering engine 520 stores pixel data of the imaged video vC by the camera 502 at each relative angle as in step S102. Then, in step S108, the rendering engine 520 calculates (level when pixels are all turned on) - (level when pixels are turned off) for the G pixels for each relative angle by using the video data obtained in steps S102 and S107, and stores the calculated result as information for obtaining the viewing angle characteristics for the G pixels.

In steps S109, S110, and S111, similar processing is performed on the B pixels.

In step S109, the rendering engine 520 performs control to a state in which B pixels of each LED panel 506 in the LED wall 505 are all turned on, and R pixels and G pixels are turned off. Then, in step S110, imaging is executed while the position of the camera 502 is sequentially changed, and the rendering engine 520 stores the video data of the imaged video vC by the camera 502 at each relative angle as in step S102. Then, in step S111, the rendering engine 520 calculates (level when pixels are all turned on) - (level when pixels are turned off) for the B pixels for each relative angle by using the video data obtained in steps S102 and S110, and stores the calculated result as information for obtaining the viewing angle characteristics for the B pixels.

As described above, the amount of luminance shift for each relative angle θ, that is, the viewing angle characteristic is measured for each of the R, G, and B pixels by using the LED wall 505 and the camera 502.

Note that, in steps S103, S106, and S109, the R pixels, the G pixels, and the B pixels are all turned on, respectively; however, if the signal levels are saturated on the camera 502 side, correct measurement is not performed, and thus measurement is required with appropriate light emission luminance that is not saturated.

Furthermore, in a case where the viewing angle characteristic changes non-linearly according to the light emission luminance, it is desirable to perform measurement a plurality of times while changing the brightness when pixels are all turned on, as necessary.

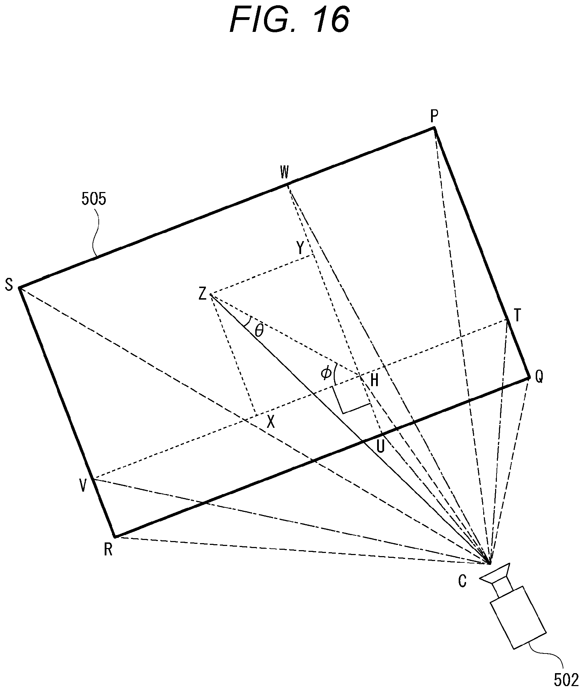

Furthermore, in steps S102, S104, S107, and S110, imaging is performed while changing the camera position, but in a case where the viewing angle characteristic of the LED is different between the longitudinal direction and the lateral direction of the screen, the position is changed not only for each relative angle θ in the horizontal direction but also in the vertical direction of the screen, and the viewing angle characteristic is obtained by performing imaging for each relative angle in the vertical direction (relative angle φ described later with reference to Fig. 16). That is, the viewing angle characteristic is stored covering all the relative angles in the longitudinal direction and the lateral direction of the screen.

Note that, in other words, if the viewing angle characteristics of the LED on the LED wall 505 are the same in the horizontal and vertical directions, it is sufficient that only one relative angle (for example, the relative angle θ) in the horizontal direction or vertical direction is considered.

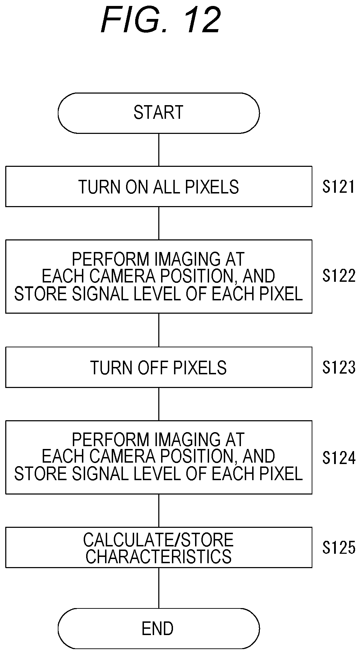

By the way, Fig. 10 illustrates measurement processing for the color LED panel, but in the case of a black-and-white LED panel, measurement is only required to be performed as illustrated in Fig. 12.

In step S121, the rendering engine 520 turns on all the pixels in the LED wall 505. Then, in step S122, imaging is executed while the position of the camera 502 is sequentially changed, and the rendering engine 520 stores the video data of the imaged video vC by the camera 502 at each relative angle.

Furthermore, the rendering engine 520 turns off all the pixels in the LED wall 505, in step S123. Then, in step S124, imaging is executed while the position of the camera 502 is sequentially changed, and the rendering engine 520 stores the video data of the imaged video vC by the camera 502 at each relative angle.

In step S125, the rendering engine 520 calculates (level when pixels are all turned on) - (level when pixels are turned off) for each pixel (or each pixel block, or a frame) for each relative angle by using the video data obtained in steps S122 and S124, and stores the calculated result. As a result, information for obtaining the viewing angle characteristic can be stored.

<4. First embodiment>

Hereinafter, various embodiments will be described as examples of performing correction according to the viewing angle characteristic.

First, as a first embodiment, an example will be described in which a correction unit that performs correction processing is provided in the rendering engine 520.

Note that, in each embodiment, as a premise, the angle dependence on the camera 502 side, that is, the lens distortion, the lens aberration, the lens shading, the sensitivity unevenness of the image sensor, and the like are appropriately corrected. Additionally, if the viewing angle characteristic of the LED wall 505 can be sufficiently grasped, the above-described measurement method can also be used for measurement for correcting various characteristics of the camera 502.

In the first embodiment, the rendering engine 520 is configured to acquire the position and angle of the camera 502 in real time, calculate the amount of shift in color and luminance caused by the viewing angle at the camera position in real time from the viewing angle characteristic of the LED measured in advance as described above, and output the background video vB in which the amount of shift is canceled.

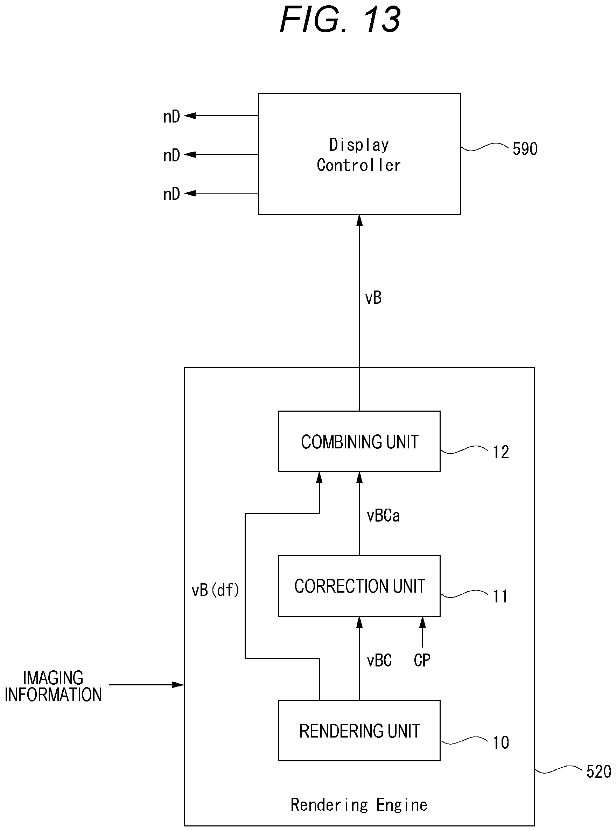

Fig. 13 illustrates a configuration example of the first embodiment. This illustrates the rendering engine 520 and the display controller 590 extracted in the configuration in Fig. 5.

The rendering engine 520 includes a rendering unit 10, the correction unit 11, and a combining unit 12.

The rendering engine 520 renders the background video vB, but as described with reference to Fig. 5, renders the video as the outer frustum in step S10, and renders the video of the inner frustum (the imaging region video vBC) according to the viewpoint position determined from the imaging information, in step S40 for each frame during the imaging. Then, the videos of the outer frustum and the inner frustum are combined with each other in step S50 for each frame.

In Fig. 13, the video of the outer frustum before combining is illustrated as a background video vB (df).

The rendering unit 10 in Fig. 13 performs rendering as the processing of steps S10, S30, and S40 in Fig. 5 described above.

The correction unit 11 performs correction processing for the viewing angle characteristic by using camera position/angle information CP, for the imaging region video vBC (inner frustum) rendered for each frame. Note that the camera position/angle information CP is information included in the imaging information from the camera 502 or the camera tracker 560. The correction unit 11 can determine the relative angle with respect to the LED wall 505 on the basis of the camera position/angle information CP.

Then, the correction unit 11 outputs an imaging region video vBCa subjected to the correction processing for the viewing angle characteristic.

As the processing in steps S50 and S60 in Fig. 5, the combining unit 12 combines the background video vB (df) with the corrected imaging region video vBC, and outputs a combined video as the background video vB to the display controller 590.

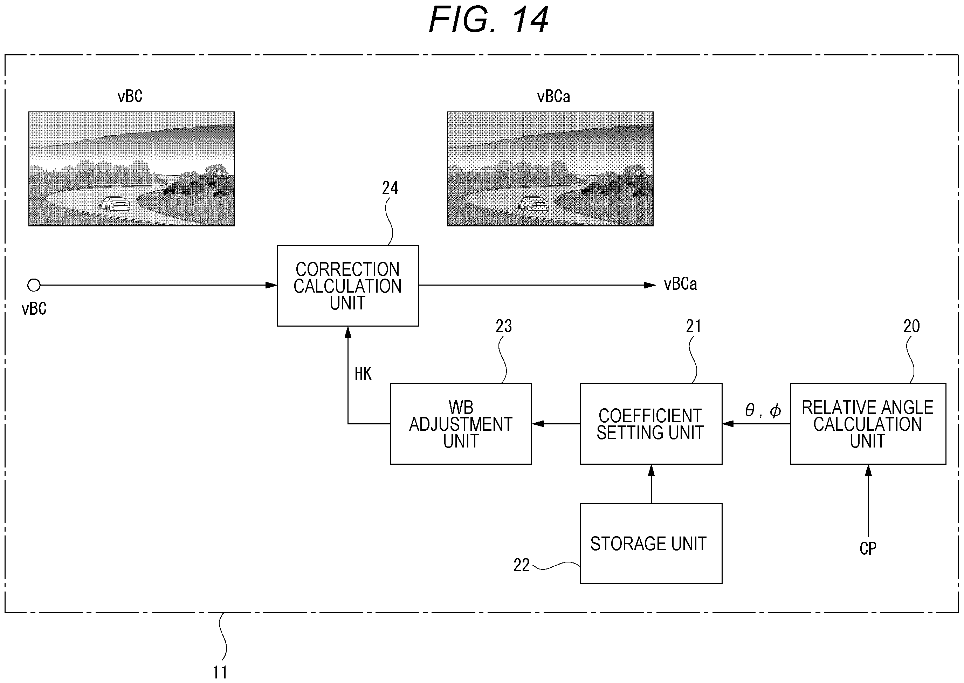

A description will be given of a configuration of the correction unit 11 in such a rendering engine 520, and processing by the correction unit 11. Fig. 14 illustrates a configuration example of the correction unit 11. Each block in Fig. 14 is assumed to be a functional block implemented by software processing, but may be configured by hardware.

The correction unit 11 is provided with a relative angle calculation unit 20, a coefficient setting unit 21, a storage unit 22, a white balance (WB) adjustment unit 23, and a correction calculation unit 24.

The relative angle calculation unit 20 obtains a relative angle between the camera 502 and the LED wall 505 in imaging the current frame on the basis of the camera position/angle information CP, for each frame timing. That is, the relative angle $\theta$ in the horizontal direction and the relative angle $\varphi$ in the vertical direction are obtained.

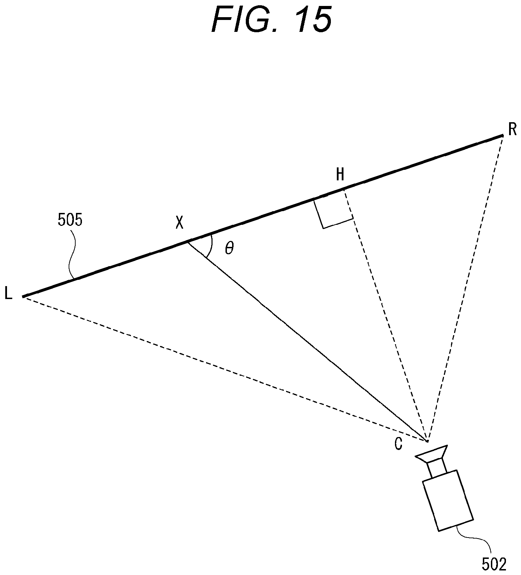

A method of calculating the relative angle will be described with reference to Figs. 15 and 16.

Fig. 15 illustrates the horizontal direction for the sake of explanation. Fig. 15 illustrates a state in which the LED wall 505 is viewed from information.

The position of the camera 502 is "C", the right end of the LED wall 505 is "R", the left end thereof is "L", and the foot of a perpendicular line drawn from the camera 502 to the LED wall 505 is "H". A distance of a line segment connecting positions is indicated by a combination of signs of positions at both ends of the line segment. For example, "CR" is a distance of a line segment between the position "C" of the camera 502 and the right end "R" of the LED wall 505. The same applies to "CH", "CL", "LR", and the like.

The following is derived from Pythagorean theorem.

[Math. 1]

$$CR^2 = CH^2 + (LR - LH)^2$$
$$CL^2 = CH^2 + LH^2$$

$$CR^2 = CH^2 + (LR - LH)^2$$
$$CL^2 = CH^2 + LH^2$$

From the above (Math. 1), the length "LH" from the left end "L" of the position "H" of the foot of the perpendicular line and the length "CH" of the perpendicular line are expressed by the length "LR" of the LED wall 505 and the distances "CR" and "CL" between the camera 502 and both ends of the LED wall 505, as follows (Math. 2).

[Math. 2]

$$LH = \frac{-CR^2 + CL^2 + LR^2}{2LR}$$

$$CH = \frac{\sqrt{-CR^4 - CL^4 - LR^4 + 2CR^2CL^2 + 2CL^2LR^2 + 2LR^2CR^2}}{2LR}$$

$$LH = \frac{-CR^2 + CL^2 + LR^2}{2LR}$$

$$CH = \frac{\sqrt{-CR^4 - CL^4 - LR^4 + 2CR^2CL^2 + 2CL^2LR^2 + 2LR^2CR^2}}{2LR}$$

Since the coordinates of any position X on the LED wall 505 can be determined from the background video vB displayed on the screen, the viewed relative angle θ can be calculated by the following (Math. 3).

[Math. 3]

$$\theta = \tan^{-1}\frac{CH}{XH}$$

$$\theta = \tan^{-1}\frac{CH}{XH}$$

Note that the length "LR" of the LED wall 505 is known by being measured in advance.

The distances "CR" and "CL" between the camera 502 and both ends of the LED wall 505 are only required to be measured in advance in a case where the camera 502 is fixed, and in a case where the camera is moved, the distances can be obtained by sequentially by measurement by a distance measuring sensor, or by information (camera position/angle information CP) from the camera tracker 560, or the like.

The above relative angle θ means that when the coordinate position of each pixel of the frame in the video is "X", the relative angle θ for the pixel can be obtained by the above (Math. 3). As a result, the relative angle θ can be obtained for each of all the pixels of one frame of the video.

In a case where one relative angle θ is obtained for one frame, the relative angle θ may be a relative angle θ for a pixel at the center of the screen, or may be a representative value such as an average value of the relative angles θ of the respective pixels.

In a case where the relative angle θ is obtained for each block of a predetermined number of pixels in one frame, the relative angle θ may be a relative angle θ for a pixel at the center of the block, or may be a representative value such as an average value of the relative angles θ of the respective pixels in the block.

However, since the positional relationship between the LED wall 505 and the camera 502 actually occurs in three dimensions, the concept of Fig. 15 is extended to three dimensions.

Fig. 16 illustrates the LED wall 505 and the camera 502 in a three-dimensional relationship.

Positions of four corners of the LED wall 505 are "P", "Q", "S", and "R", respectively. The position of the camera 502 is "C", and the foot of a perpendicular line from the camera 502 to the LED wall 505 is "H". Furthermore, positions on end sides of the LED wall 505 extended in the horizontal and vertical directions from the position "H" are "T", "U", "V", and "W". A distance (length) of each line segment is indicated by a combination of signs of positions at both ends of the line segment, similarly to the case of Fig. 15.

Since the LED wall 505 is rectangular, the coordinates of the foot "H" of the perpendicular line drawn from the camera 502 onto the LED wall 505 and the length "CH" of the perpendicular line can be calculated from the distances "CS", "CR", "CQ", and "CP" from the camera 502 to the four corners of the LED wall 505 and the lengths "PQ" and "SP" of the vertical and horizontal sides of the LED wall 505 according to the following (Math. 4).

Since PQ = SR = WU, PT = SV = WH, SP = RQ = VT, and SW = RU = VH are satisfied, the following is obtained.

[Math. 4]

$$CT = \frac{\sqrt{-CP^4 - CQ^4 - WU^4 + 2CP^2CQ^2 + 2CQ^2WU^2 + 2WU^2CP^2}}{2WU}$$

$$CV = \frac{\sqrt{-CS^4 - CR^4 - WU^4 + 2CS^2CR^2 + 2CR^2WU^2 + 2WU^2CS^2}}{2WU}$$

$$CW = \frac{\sqrt{-CS^4 - CP^4 - VT^4 + 2CS^2CP^2 + 2CP^2VT^2 + 2VT^2CS^2}}{2VT}$$

$$CU = \frac{\sqrt{-CR^4 - CQ^4 - VT^4 + 2CR^2CQ^2 + 2CQ^2VT^2 + 2VT^2CR^2}}{2VT}$$

$$VH = \frac{-CT^2 + CV^2 + VT^2}{2VT}$$

$$WH = \frac{-CU^2 + CW^2 + WU^2}{2WU}$$

$$CH = \frac{\sqrt{-CT^4 - CV^4 - VT^4 + 2CT^2CV^2 + 2CV^2VT^2 + 2VT^2CT^2}}{2VT}$$

$$CT = \frac{\sqrt{-CP^4 - CQ^4 - WU^4 + 2CP^2CQ^2 + 2CQ^2WU^2 + 2WU^2CP^2}}{2WU}$$

$$CV = \frac{\sqrt{-CS^4 - CR^4 - WU^4 + 2CS^2CR^2 + 2CR^2WU^2 + 2WU^2CS^2}}{2WU}$$

$$CW = \frac{\sqrt{-CS^4 - CP^4 - VT^4 + 2CS^2CP^2 + 2CP^2VT^2 + 2VT^2CS^2}}{2VT}$$

$$CU = \frac{\sqrt{-CR^4 - CQ^4 - VT^4 + 2CR^2CQ^2 + 2CQ^2VT^2 + 2VT^2CR^2}}{2VT}$$

$$VH = \frac{-CT^2 + CV^2 + VT^2}{2VT}$$

$$WH = \frac{-CU^2 + CW^2 + WU^2}{2WU}$$

$$CH = \frac{\sqrt{-CT^4 - CV^4 - VT^4 + 2CT^2CV^2 + 2CV^2VT^2 + 2VT^2CT^2}}{2VT}$$

Since the coordinates of any position Z on the LED wall 505 can be determined from the background video vB displayed on the screen, the viewed angle θ is obtained by the following (Math. 5).

[Math. 5]

$$\theta = \tan^{-1}\frac{CH}{ZH}$$

$$ZH = \sqrt{XH^2 + YH^2}$$

$$\theta = \tan^{-1}\frac{CH}{ZH}$$

$$ZH = \sqrt{XH^2 + YH^2}$$

If the viewing angle characteristics of the LED on the LED wall 505 are the same in the horizontal and vertical directions, it is only required to consider the above relative angle θ. However, in a case where the viewing angle characteristics of the LED are different between the horizontal direction and the vertical direction, the relative angle φ is also obtained by the following (Math. 6).

[Math. 6]

$$\Phi = \tan^{-1}\frac{YH}{XH}$$

$$\Phi = \tan^{-1}\frac{YH}{XH}$$

The relative angle calculation unit 20 in Fig. 14 obtains the relative angle θ or the relative angles θ and φ as described above, and supplies the relative angle θ or the relative angles θ and φ to the coefficient setting unit 21.

The coefficient setting unit 21 sets a correction coefficient HK by using information on the relative angle and information stored in the storage unit 22.

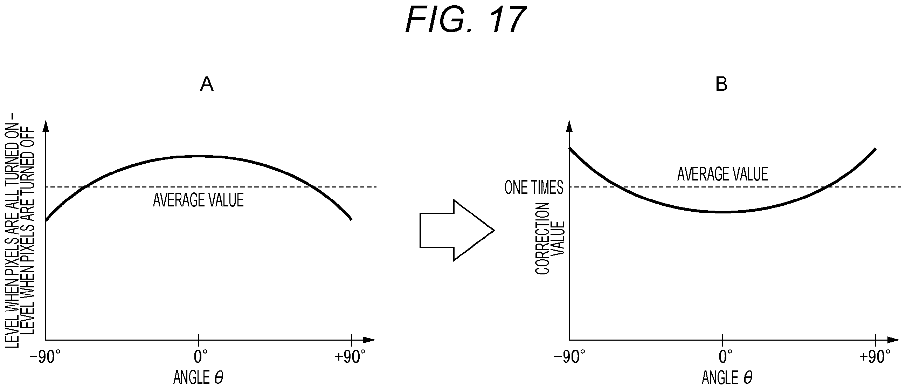

The storage unit 22 stores a value of (level when pixels are all turned on) - (level when pixels are turned off) for each relative angle by the measurement described with reference to Figs. 10 and 12. For example, as illustrated in Fig. 17A, information on the luminance level for each relative angle θ is stored.

Note that, in a case where correction is performed according to the relative angles θ and φ in both the horizontal and vertical directions, it is sufficient that the information on the luminance level according to the relative angle θ from +90 degrees to -90 degrees in the horizontal direction as illustrated in Fig. 17A is stored corresponding to each of the relative angles φ from +90 degrees to -90 degrees in the vertical direction.

Alternatively, the storage unit 22 may store the correction coefficient HK for each relative angle θ (or relative angles θ and φ) obtained from the viewing angle characteristic instead of the information according to these viewing angle characteristics.

Note that, for each of the R, G, and B pixels, the value itself of (level when pixels are all turned on) - (level when pixels are turned off) for each relative angle may be referred to as a viewing angle characteristic. This is to indicate a change in luminance level of R, G, and B for each relative angle.

Furthermore, for example, an average value is obtained by averaging the values of (level when pixels are all turned on) - (level when pixels are turned off) at all angles from -90 degrees to +90 degrees, and a value divided by the average value may be referred to as a viewing angle characteristic. That is, information representing luminance level variation for each viewing angle (relative angle between the camera 502 and the LED wall 505) can be referred to as information on the viewing angle characteristic.

The correction coefficient is, for example, a reciprocal of a value obtained by dividing the value of (level when pixels are all turned on) - (level when pixels are turned off) by an average value of the values of (level when pixels are all turned on) - (level when pixels are turned off) at all angles from -90 degrees to +90 degrees. This is illustrated in Fig. 17B.

That is, the reciprocal is taken of the luminance level variation due to the viewing angle characteristic, whereby the correction coefficient HK is obtained that cancels the luminance level variation.

Note that, in the example of Fig. 17B, since the average value is "1 times", that is, the correction coefficient is 1.0, a value of the correction coefficient is not "1.0" in the case of the relative angle = 0 degrees, but "1.0" at the angle near the center of $\pm90$ degrees from 0 degrees.

A reason why the division by the average value is performed is to suppress level variation during the correction processing as much as possible. That is, the variation in the dynamic range of the corrected luminance is suppressed. However, since the average value of the correction values is not necessarily "1.0", the white balance deviates if the characteristics are different among R, G, and B. Thus, it is also necessary to adjust the white balance.

Furthermore, the correction coefficient is not necessarily divided by the average value, and for example, the correction coefficient for each relative angle may be obtained on the basis of a value of (level when pixels are all turned on) - (level when pixels are turned off) when the relative angle is 0 degrees.

In a case where the value of (level when pixels are all turned on) - (level when pixels are turned off) is stored in the storage unit 22, the coefficient setting unit 21 is only required to obtain the correction coefficient for each relative angle by using the value of the level difference as described above, and determine the correction coefficient according to the relative angles $\theta$ and $\varphi$ from the relative angle calculation unit 20.

Furthermore, in a case where the correction coefficient for each relative angle calculated on the basis of the value of (level when pixels are all turned on) - (level when pixels are turned off) is stored in the storage unit 22, the coefficient setting unit 21 is only required to read the correction coefficient from the storage unit 22 according to the relative angles $\theta$ and $\varphi$ from the relative angle calculation unit 20.

Through the above processing, the coefficient setting unit 21 sets the correction coefficient HK. In this case, the correction coefficient HK may be set for each pixel in the current frame, or the correction coefficient HK may be set for each pixel block. Alternatively, one correction coefficient HK may be set in one entire frame. These are only required to be determined according to the accuracy required for the correction processing.

The correction coefficient HK set by the coefficient setting unit 21 in Fig. 14 is adjusted by the WB adjustment unit 23 so as not to cause a deviation in white balance, and then supplied to the correction calculation unit 24.

The imaging region video vBC is input from the rendering unit 10 to the correction calculation unit 24. The correction calculation unit 24 performs correction calculation on the imaging region video vBC by using the correction coefficient HK. That is, the pixel value in the frame is multiplied by the correction coefficient HK. Then, the corrected imaging region video vBCa is output. The corrected imaging region video vBCa is supplied to the combining unit 12.

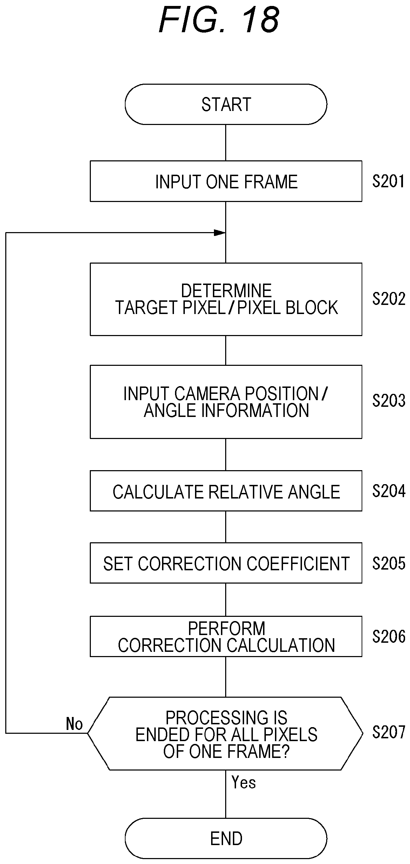

Fig. 18 illustrates an example of correction processing by the correction unit 11 as illustrated in Fig. 14 above. The correction unit 11 executes the processing in Fig. 18 for each frame as the imaging region video vBC in an imaging period by the camera 502.

The correction unit 11 receives an input of one frame to be corrected in step S201.

Then, steps S202 to S207 are repeated until the processing for the one frame is completed.

In step S202, the correction unit 11 determines a target pixel or pixel block in one frame.

In step S203, the correction unit 11 receives an input of the camera position/angle information CP. That is, at the time point of rendering the current frame, information on the camera position and orientation (imaging angle) included in the imaging information from the camera 502 or the camera tracker 560 is obtained.

In step S204, the correction unit 11 calculates the relative angle $\theta$ (or $\theta$ and $\varphi$) for the pixel or the pixel block determined in step S202 by a function of the relative angle calculation unit 20.

In step S205, the correction unit 11 calculates the correction coefficient HK according to the relative angle by a function of the coefficient setting unit 21.

Note that adjustment for white balance adjustment may be performed on the correction coefficient HK as described with reference to Fig. 14.

In step S206, the correction unit 11 performs processing of correcting the pixel value of the target pixel or pixel block in the current frame by using the correction coefficient HK.

In step S207, the correction unit 11 determines whether or not the above processing has ended for all the pixels of the current frame. If the processing has not ended, the processing returns to step S202, and similar processing after step S203 is executed with an unprocessed pixel or pixel block as a processing target.

At the time point when the processing for all the pixels of one frame has ended, the processing of Fig. 18 for one frame ends.

Note that the above is an example in which the correction coefficient HK is obtained for each pixel or each pixel block in one frame to perform the correction; however, in a case where the correction is performed with the same correction coefficient HK for all the pixels in one frame, it is sufficient that the processing from step S203 to step S205 is performed once and the correction calculation is performed with the correction coefficient HK for all the pixels in step S206.

The above correction is performed, whereby the background video vB output from the rendering engine 520 in Fig. 13 is given the reverse characteristic of the level variation due to the viewing angle characteristic in advance.

Thus, in the imaged video vC obtained by imaging the background video vB displayed on the LED wall 505 by the camera 502 (that is, the imaged video of the imaging region video vBC), the change in color and luminance due to the viewing angle characteristic is added, whereby the change in color and luminance due to the viewing angle characteristic is canceled conversely. That is, as the imaged video vC, a video is obtained having the same color and luminance as those of the imaging region video vBC originally generated by the rendering unit 10.

<5. Second embodiment>

A second embodiment is an example in which the correction unit 11 that performs correction processing is provided as an apparatus separate from the rendering engine 520.

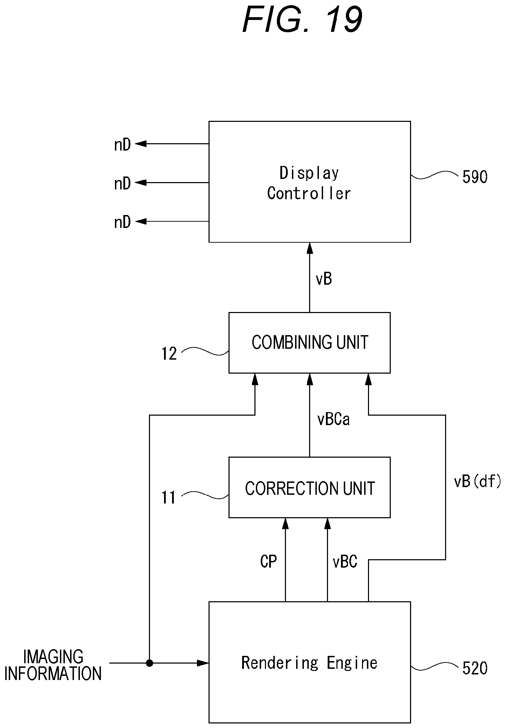

Fig. 19 illustrates a configuration example. This illustrates the rendering engine 520 and the display controller 590 in the configuration in Fig. 5, and the correction unit 11 and the combining unit 12 as devices separate from them. Note that the correction unit 11 and the combining unit 12 may be provided as an integrated device or may be separate devices.

The rendering engine 520 generates the background video vB (df) constituting the outer frustum, and supplies the combining unit 12 as the video of the outer frustum. Furthermore, the rendering engine 520 generates the imaging region video vBC according to the viewpoint position determined from the imaging information for each frame. Then, the rendering engine 520 outputs the imaging region video vBC and the camera position/angle information CP included in the imaging information to the correction unit 11.

With the configuration described with reference to Fig. 14, the correction unit 11 performs correction processing as in the processing example in Fig. 18 and corrects the imaging region video vBC. Then, the corrected imaging region video vBCa is output to the combining unit 12.

The combining unit 12 combines the imaging region video vBCa with the background video vB (df) to generate the background video vB for each frame. At this time, the combining unit 12 can determine with which region in the background video vB (df) the imaging region video vBCa is to be combined from the imaging information including the camera position/angle information CP.

The combined background video vB is supplied to the display controller 590, and then the background video vB is displayed on the LED wall 505 as described with reference to Fig. 5.

Also in this case, as in the first embodiment, the imaged video vC obtained by imaging the background video vB displayed on the LED wall 505 by the camera 502 is a video in which the change in color and luminance due to the viewing angle characteristic is canceled. That is, as the imaged video vC, a video is obtained having the same color and luminance as those of the imaging region video vBC originally generated by the rendering unit 10.

<6. Third embodiment>

A third embodiment is a configuration example in which the correction unit 11 that performs correction processing is provided in the display controller 590.

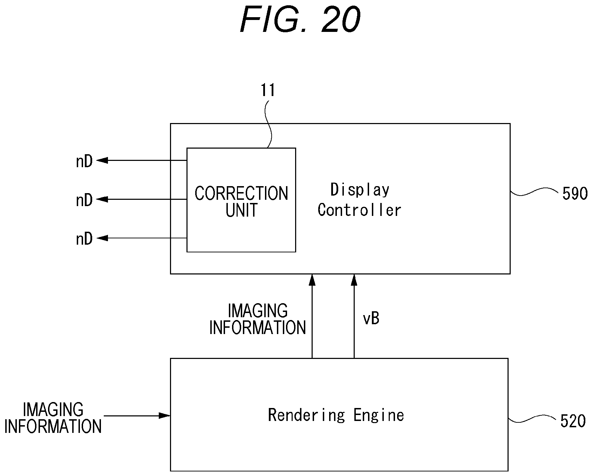

Fig. 20 illustrates a configuration example. In the rendering engine 520 and the display controller 590 in the configuration in Fig. 5, the correction unit 11 is provided in the display controller 590.

The rendering engine 520 supplies the background video vB obtained by combining the outer frustum with the imaging region video vBC that is the inner frustum, and the imaging information to the display controller 590.

The display controller 590 generates divided video signals nD obtained by dividing the video data of one frame into video portions to be displayed on the respective LED panels 506, and transmits the divided video signals nD to the respective LED panels 506. In this case, the divided video signals nD are generated from the background video vB corrected by the correction unit 11.

The correction unit 11 has the configuration in Fig. 14. In particular, in this case, the correction unit 11 determines a region of the inner frustum (range of the imaging region video vBC) with reference to the imaging information for each frame of the background video vB supplied from the rendering engine 520.

Then, the correction processing as in the processing example in Fig. 18 is performed on the imaging region video vBC by using the camera position/angle information CP included in the imaging information, whereby the background video vB is generated in which a range of the imaging region video vBCa is corrected.

The display controller 590 divides such a corrected background video vB into video portions to be displayed on the respective LED panels 506 to generate and output the divided video signals nD.

Also in this case, similarly to the first embodiment, since the background video vB displayed on the LED wall 505 is given the reverse characteristic of the viewing angle characteristic, the imaged video vC obtained by imaging the background video vB by the camera 502 is a video in which the change in color and luminance due to the viewing angle characteristic is canceled.

<7. Fourth embodiment>

A fourth embodiment is a configuration example in which the correction unit 11 that performs correction processing is provided in the LED processor 570.

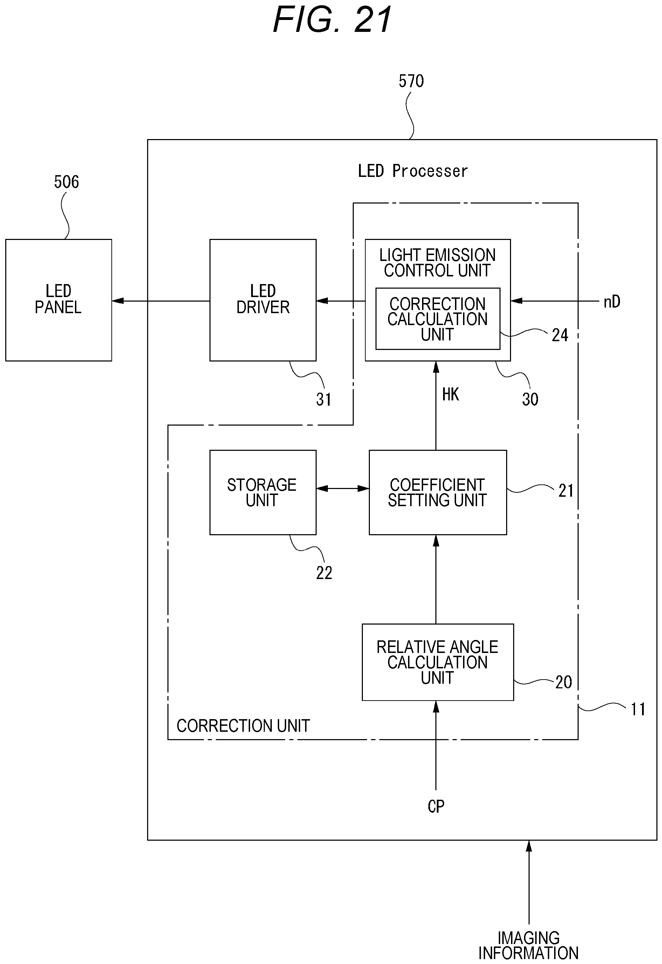

Fig. 21 illustrates a configuration example. This illustrates the LED processor 570 and the LED panel 506 in the configuration in Fig. 5, and the correction unit 11 is provided in the LED processor 570.

In this case, as the correction unit 11, the relative angle calculation unit 20, the coefficient setting unit 21, and the storage unit 22 are provided. Furthermore, the correction calculation unit 24 is provided in a light emission control unit 30.

Functions of the relative angle calculation unit 20, the coefficient setting unit 21, and the storage unit 22 are similar to those in Fig. 14, and the relative angle is obtained on the basis of the camera position/angle information CP, and the correction coefficient HK according to the relative angle is set.

The LED processor 570 includes an LED driver 31 that causes a light emission drive current to flow through the LED of the LED panel 506, and the light emission control unit 30 that controls a level or a light emission period length of the light emission drive current by the LED driver 31 and controls the luminance of each LED.

In the example of Fig. 21, the correction calculation unit 24 corrects a control value of the light emission luminance of each LED by the light emission control unit 30. The control value is a value set on the basis of the background video vB, and is, for example, a value of an LED light emission level for each pixel, a value of a pulse duty of a pulse for performing PWM control on an LED light emission period, or the like.

The correction calculation unit 24 performs calculation using the correction coefficient HK on these control values to obtain the background video vB having a reverse characteristic according to the viewing angle characteristic.

As a result, the light emission luminance of each LED of the LED panel 506 is controlled so as to be in a state of reflecting the reverse characteristic of the viewing angle characteristic, and the imaged video vC obtained by imaging the background video vB on the LED wall 505 by the camera 502 is in a state in which the change in color and luminance due to the viewing angle characteristic at the time of imaging is canceled.

Note that, also in this case, the correction by the correction calculation unit 24 is only required to be performed only in the region of the inner frustum. Thus, each LED processor 570 is only required to determine whether or not the video of the inner frustum (imaging region video vBC) is included in the input divided video signals nD on the basis of the imaging information, and perform the correction calculation only for the pixels constituting the inner frustum in a case where the video of the inner frustum is included.

<8. Fifth embodiment>

A fifth embodiment is an example of correcting the imaged video vC by the camera 502.

In a case where the background video vB displayed on the LED wall 505 is not corrected, the change in color and luminance due to the viewing angle characteristic occurs in the imaged video vC imaged by the camera 502.

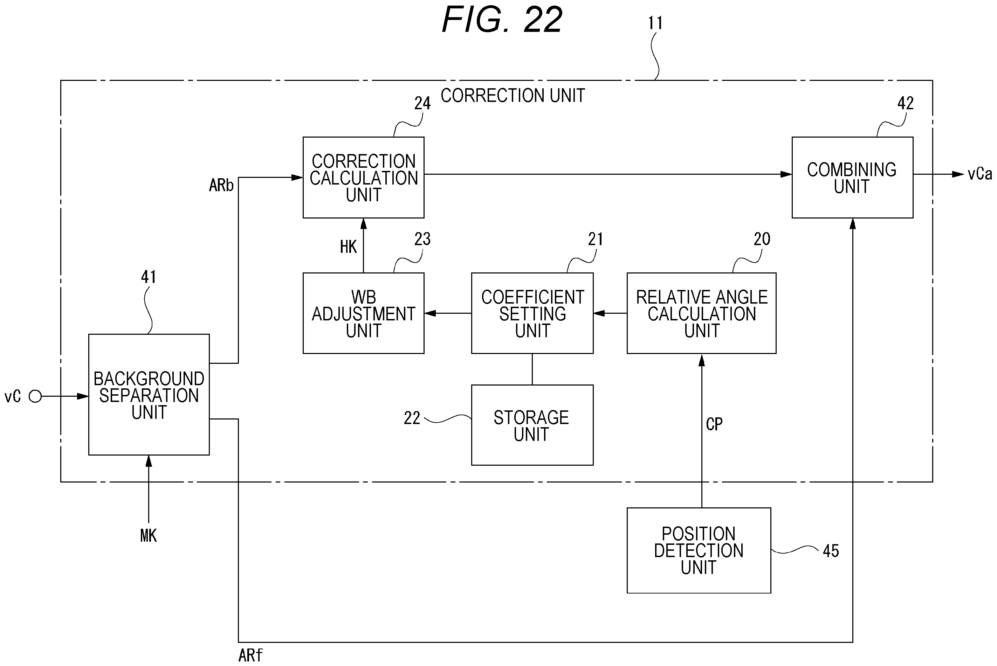

For this imaged video vC, the correction unit 11 as illustrated in Fig. 22 is provided.

Note that the correction unit 11 may be built in the camera 502, or may be configured separately from the camera 502 in a form such as a set top box, for example.

In any case, the imaged video vC is input to the correction unit 11.

Similarly to Fig. 14, the correction unit 11 includes the relative angle calculation unit 20, the coefficient setting unit 21, the storage unit 22, the WB adjustment unit 23, and the correction calculation unit 24, and these units perform the processing described with reference to Fig. 14.

Note that a position detection unit 45 is illustrated, and this is an apparatus unit that detects the camera position/angle information CP. The position detection unit 45 may be, for example, the camera tracker 560, or may be an apparatus unit that detects the self position and the imaging angle in the camera 502. The relative angle calculation unit 20 can obtain the relative angle θ (or θ and φ) by obtaining the camera position/angle information CP by the position detection unit 45.

In the example of Fig. 22, the correction unit 11 is provided with a background separation unit 41 and a combining unit 42.

The background separation unit 41 performs processing of separating a background area ARb and a foreground area ARf from each other for the imaged video vC. The foreground area ARf is, for example, a pixel region in which an object in the performance area 501 in Fig. 1, that is, the performer 510, a material body, or the like is reflected in the imaged video vC. The background area ARb is a pixel region in which the background video vB of the LED wall 505 is reflected in the imaged video vC.

The background separation unit 41 separates the background area ARb and the foreground area ARf from each other for each frame of the input imaged video vC, supplies pixel data of the background area ARb to the correction calculation unit 24, and supplies pixel data of the foreground area ARf to the combining unit 42.

For this separation, for example, a mask MK is used.

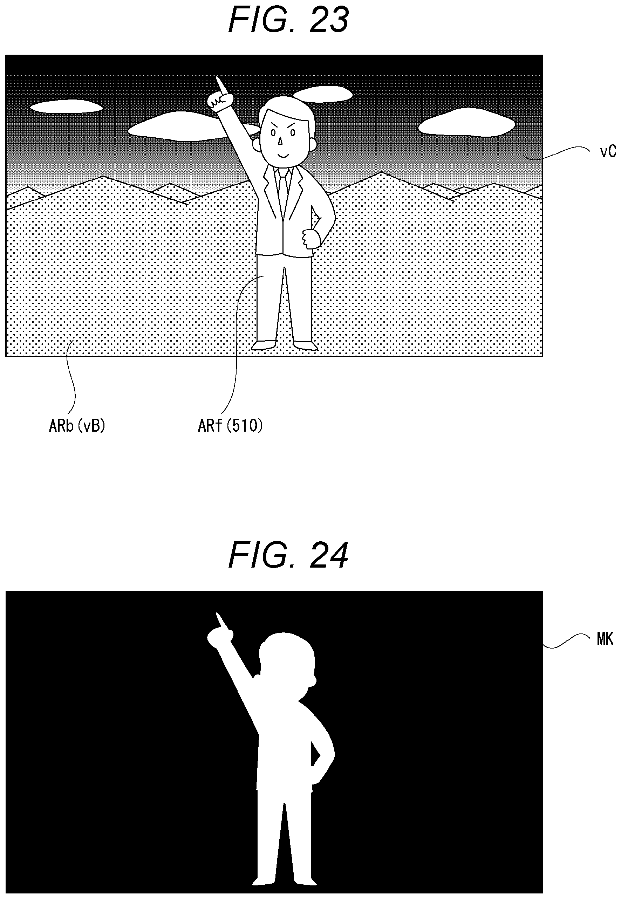

For example, for one frame of the imaged video vC including the foreground area ARf in which the performer 510 is reflected and the background area ARb in which the background video vB is reflected as illustrated in Fig. 23, the mask MK as illustrated in Fig. 24 is generated. The mask MK is information that separates a region of the imaged object and a region of the video of the LED wall 505 from each other within one frame of the captured video vC.

Such a mask MK is generated for each frame and applied to the separation processing, whereby the background area ARb and the foreground area ARf can be separated from each other for each frame.

Here, a configuration example for generating the mask MK will be described.

As an example, there is a method of using a short wavelength infra-red (SWIR) camera for generating the mask MK. By using the SWIR camera, it is possible to separate the video of the LED wall 505 in which the light source changes drastically and the video of the subject to be the foreground from each other.

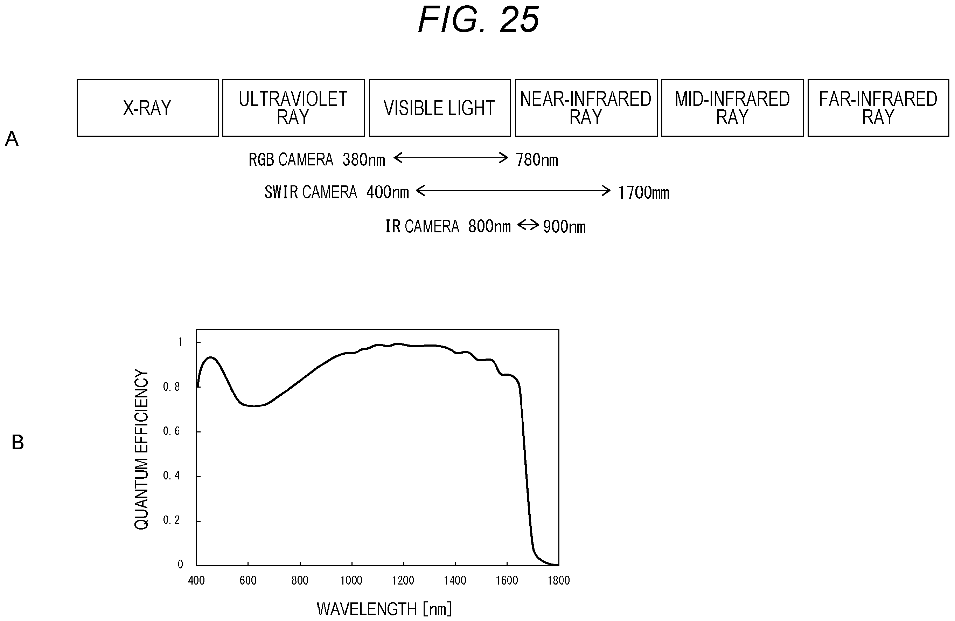

Fig. 25A illustrates wavelength bands that can be imaged by an RGB camera, an SWIR camera, and an IR camera (infrared light camera).

The RGB camera is a camera that images visible light in a wavelength band of 380 nm to 780 nm, for example. Normally, the RGB camera is used as the camera 502 for obtaining the imaged video vC. The IR camera is a camera that images near-infrared light of 800 nm to 900 nm.

Examples of the SWIR camera include the following types (a), (b), and (c).

(a) Camera capable of imaging wavelength band of 900 nm to 2500 nm
(b) Camera capable of imaging wavelength band of 900 nm to 1700 nm
(c) Camera capable of imaging wavelength band near 1150 nm (with front-back tolerance)

Although these are examples, for example, the SWIR camera covers a wider wavelength band than the IR camera, and a camera capable of imaging in a wavelength band of, for example, 400 nm to 1700 nm, or the like is commercially available. Fig. 25B illustrates the quantum efficiency for each wavelength of a commercially available SWIR camera. As illustrated, high quantum efficiency is achieved in the range of 400 nm to 1700 nm. That is, since the wavelength bands of the above (b) and (c) can be covered, any SWIR camera having characteristics as illustrated in Fig. 25B is applicable.

In the imaging system 500 in Fig. 5, for example, an object such as the performer 510 is irradiated with infrared rays using a part of the light 580 and imaged by the SWIR camera. In the near-infrared band, the video on the LED wall 505 is not reflected and becomes a black image, and the performer 510 and the like reflect infrared light and a certain degree of luminance is observed. Thus, by determining a luminance difference in the frame in the imaged video by the SWIR camera, it is possible to generate the mask MK that extracts only the object with high accuracy.

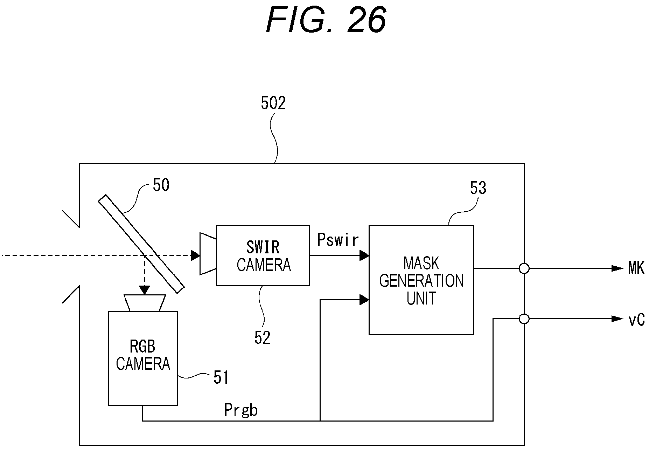

In order to use such an SWIR camera, for example, the camera 502 is configured as illustrated in Fig. 26.

An RGB camera 51 and an SWIR camera 52 are arranged in a unit as one camera 502. Then, incident light is split by a beam splitter 50, and the split light is incident on the RGB camera 51 and the SWIR camera 52 in a state of the same optical axis.

The RGB camera 51 outputs a video Prgb to be used as the imaged video vC. The SWIR camera 52 outputs a video Pswir for generating the mask MK.

The camera 502 is configured as a coaxial camera including the RGB camera 51 and the SWIR camera 52 as described above, whereby the RGB camera 51 and the SWIR camera 52 do not generate parallax, and the video Prgb and the video Pswir can be videos having the same timing, the same angle of view, and the same visual field range.

Mechanical position adjustment and optical axis alignment using a video for calibration are performed in advance in the unit as the camera 502 so that the optical axes coincide with each other. For example, processing of imaging the video for calibration, detecting a feature point, and performing alignment is performed in advance.

Note that, even in a case where the RGB camera 51 uses a high-resolution camera for high-definition video content production, the SWIR camera 52 does not need to have high resolution as well. The SWIR camera 52 is only required to be a camera that can extract a video whose imaging range matches that of the RGB camera 51. Thus, the sensor size and the image size are not limited to those matched with those of the RGB camera 51.

Furthermore, at the time of imaging, the RGB camera 51 and the SWIR camera 52 are synchronized with each other in frame timing.

Furthermore, it is preferable that the SWIR camera 52 also performs zooming or adjusts a cutout range of an image according to zoom operation of the RGB camera 51.

Note that the SWIR camera 52 and the RGB camera 51 may be arranged in a stereo manner. This is because the parallax does not become a problem in a case where the subject does not move in the depth direction.

Furthermore, a plurality of SWIR cameras 52 may be provided.

In the configuration in Fig. 26, the video Prgb and the video Pswir by the RGB camera 51 and the SWIR camera 52 are input to the mask generation unit 53. The mask generation unit 53 can be configured by, for example, a video processing processor. The mask generation unit 53 receives an input of the video Pswir from the SWIR camera 52 and generates the mask MK. Note that, in a case where the cutout range from the video Pswir is adjusted at the time of generating the mask MK, the mask generation unit 53 also receives an input of the video Prgb from the RGB camera 51 and refers to the video Prgb.

In this manner, the video Prgb (that is, the imaged video vC) and the mask MK obtained from the camera 502 are supplied to the background separation unit 41 in the correction unit 11 in Fig. 22. As a result, the background area ARb and the foreground area ARf can be separated from each other by using the mask MK.

The correction calculation unit 24 in the correction unit 11 performs a correction calculation of multiplying the pixel data of the background area ARb by the correction coefficient HK.

For example, in a case where the relative angle calculation unit 20 and the coefficient setting unit 21 set the correction coefficient HK for each pixel, the correction calculation unit 24 performs the correction calculation using the correction coefficient HK set for each pixel.

Then, the correction calculation unit 24 supplies the pixel data after the correction calculation to the combining unit 42.

The combining unit 43 combines the pixel data of the foreground area ARf with the pixel data after the correction calculation to generate video data of one frame. This is an imaged video vCa of one frame after the correction.

The imaged video vCa is a video obtained by returning color and luminance of the imaged video vC in which the color and luminance change due to the viewing angle characteristic occurs in the portion of the background video vB to those as in the original background video vB.

<9. Coping with curved surface panel>

The first to fifth embodiments so far have been described on the premise of the planar LED wall 505 or the LED panel 506, but the technology of each embodiment is applicable even in a case where the LED wall 505 is configured as a curved surface.

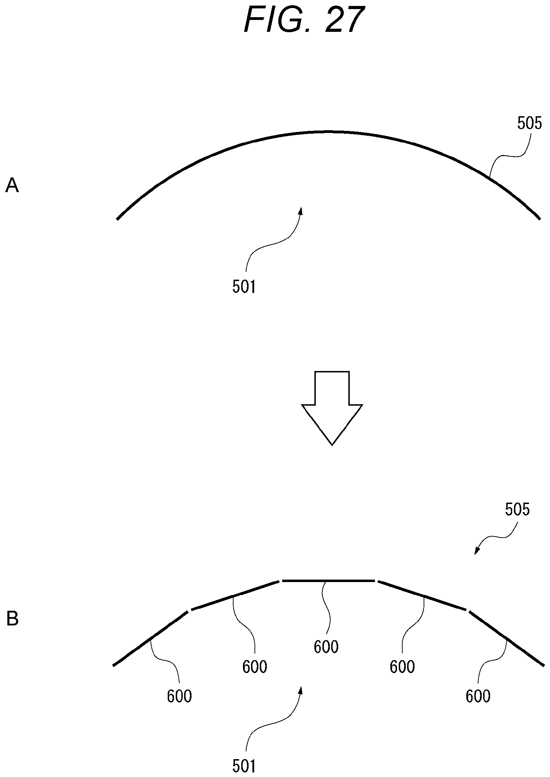

Fig. 27A is a schematic diagram of the LED wall 505 as viewed from above, and is an example in which the LED wall 505 is configured by a curved surface surrounding the performance area 501.

However, even in such a case, actually, as illustrated in Fig. 27B, panel units 600 each including one or a plurality of planar LED panels 506 are combined together to form a curved surface.

Thus, it is sufficient that the viewing angle characteristic is measured for each panel unit 600, and at the time of imaging, the correction coefficient HK is obtained for each panel unit 600 to perform the correction calculation.

As a result, in the first to fourth embodiments, regarding the background video vB displayed on the LED wall 505, as a video having a reverse characteristic of the viewing angle characteristic, a video having original color and luminance can be obtained in the imaged video vC.

Alternatively, in the case of the fifth embodiment, the imaged video vC is corrected, and a video of the background area having original color and luminance can be obtained.

Note that a display in which the panel itself has a curved surface may be used instead of a combination of the panel units 600 including the planar LED panels 506. In such a case, it is conceivable to perform correction calculation according to the viewing angle characteristic and the relative angle in a case where the relative angle is set as 0 degrees in a case where the relationship between the optical axis of the camera 502 and the center of the imaging range on the panel is 90 degrees.

<10. Summary and modification examples>

According to the above embodiments, the following effects can be obtained.

In the first to fifth embodiments, the information processing apparatus 70 includes the correction unit 11 that corrects a video by using the correction coefficient HK generated on the basis of the relative angle between the camera 502 and the LED panel 506 (LED panel 506) and the viewing angle characteristic of the LED wall 505 (LED panel 506).

Here, the information processing apparatus 70 is an information processing apparatus such as the rendering engine 520 in the first embodiment, a processor or the like constituting the correction unit 11 in the second embodiment, the display controller 590 in the third embodiment, the LED processor 570 in the fourth embodiment, and the camera 502 or a set top box in the fifth embodiment.

In the imaging system including the information processing apparatus 70, even if the camera 502 is placed in various viewpoint directions with respect to the LED panel 506 (LED wall 505) to perform imaging, it is possible to obtain a video having originally intended luminance and hue by correcting the video by the processing by the correction unit 11. That is, the influence of the shift in color and luminance due to the viewing angle characteristic of the LED panel 506 can be eliminated.

The correction unit 11 in the first, second, third, and fourth embodiments performs correction so that the corrected background video vB is displayed on the LED wall 505 (LED panel 506).

The background video vB (including the imaging region video vBC) displayed on the LED panel 506 is corrected, whereby a video having a reverse characteristic of the viewing angle characteristic shifted according to the relative angle between the camera and the display is displayed on the LED panel 506. As a result, the imaged video vC shifted by the viewing angle characteristic becomes a video having original luminance and hue.

In the first embodiment, the correction unit 11 is provided in the rendering engine 520 that renders the background video vB, and the rendering engine 520 corrects and outputs the rendered imaging region video vBC by the correction unit 11.

As illustrated in Fig. 13, the background video vB (the imaging region video vBC) supplied to the display controller 590 is already corrected video data by being corrected and output by the correction unit 11 in the rendering engine 520. With such a configuration, the corrected video can be displayed on the LED panel 506, and the change in color and luminance due to the viewing angle characteristic can be canceled in the imaged video vC.

Note that the video data that is generated by rendering and is to be corrected by the correction unit 11 is not limited to the video data serving as the "background". Furthermore, it may not be necessarily intended to be imaged together with the object. That is, the present technology can be applied to any video data as long as it is video data displayed on a display as an imaging target.

In the second embodiment, the correction unit 11 corrects the video data output from the rendering engine 520.

As illustrated in Fig. 19, the correction unit 11 is provided separately from the rendering engine 520, and the correction unit 11 corrects and outputs the video data output from the rendering engine 520, so that the background video vB (imaging region video vBC) supplied to the display controller 590 is already corrected video data. Even with such a configuration, it is possible to display the corrected video on the LED panel 506 and cancel the change in color and luminance due to the viewing angle characteristic in the imaged video vC.

In the third embodiment, the correction unit 11 corrects the video data distributed and supplied to the plurality of LED panels 506 in the display controller 590.

As illustrated in Fig. 20, the correction unit 11 is provided in the display controller 590, and the corrected divided video signals nD are output, so that the corrected video can be displayed by the LED panel 506. Even with such a configuration, it is possible to display the corrected video on the LED panel 506 and cancel the change in color and luminance due to the viewing angle characteristic in the imaged video vC.

In the fourth embodiment, the correction unit 11 is provided in the LED processor 570 that is a display control unit that performs luminance control of the pixels of the LED panel 506, and is configured to correct the control value of the luminance of the pixels according to the correction coefficient HK.

As illustrated in Fig. 21, the correction unit 11 is provided in the LED processor 570, LED light emission drive control reflecting the correction coefficient HK is performed, and the LED light emission luminance is controlled, so that the corrected video can be displayed by the LED panel 506. Even with such a configuration, it is possible to display the corrected video on the LED panel 506 and cancel the change in color and luminance due to the viewing angle characteristic in the imaged video vC.

In the first, second, third, and fourth embodiments, the correction unit 11 corrects the imaging region video vBC determined on the basis of the imaging information on the camera 502 in the video to be displayed on the LED wall 505.

The imaged video vC is not the entire background video vB but a range of the imaging region video vBC (inner frustum) imaged by the camera 502. Thus, it is sufficient that at least the imaging region video vBC is corrected. For this reason, in each configuration of Figs. 13, 19, 20, and 21, the correction is performed in the range of the imaging region video vBC. As a result, the processing load can be reduced as compared with a case where the entire background video vB is corrected, which is particularly advantageous for real-time processing.

Note that, in practice, it is appropriate to perform correction in a region in which the imaging region video vBC is slightly expanded in four directions not only in the range of the imaging region video vBC accurately. This is because the range imaged by the camera 502 slightly deviates due to a timing error caused by the drawing delay, and the video of the outer frustum may be reflected in the imaged video vC.

In the fifth embodiment, the correction unit 11 corrects the imaged video vC imaged by the camera 502 (see Fig. 22).

When a video is imaged in which a shift in luminance and color due to the viewing angle characteristic by imaging of the background video vB (including the imaging region video vBC) displayed on the LED panel 506, the imaged video vC may be corrected. By canceling the shift in luminance and color due to the viewing angle characteristic with respect to the imaged video vC, it is possible to obtain the imaged video vCa having the original luminance and hue.

In the fifth embodiment, the correction unit 11 separates the background area ARb and the foreground area ARf from each other in the imaged video vC imaged by the camera 502, performs correction on the background area ARb, and combines the foreground area ARf with the corrected background area ARb.

The imaged video vC includes the background video vB (imaging region video vBC) displayed on the LED panel 506 and a foreground video, as the subjects. The shift in color and luminance occurs in the portion of the background video vB. Thus, the foreground and the background are separated from each other, and only the portion in which the background video vB is reflected is corrected. Then, after the correction, the background video is combined with the foreground video, whereby a video having original luminance and hue can be obtained. In other words, it is possible to prevent the foreground area ARf that is not affected by the viewing angle characteristic from being corrected.

In the embodiments, as the processing of measuring the viewing angle characteristic, the viewing angle characteristic is obtained on the basis of the information obtained by the imaging performed for each of the display state and the non-display state of the LED panel 506 at the plurality of viewing angles with respect to the LED wall 505 by the camera 502, and storage processing is performed. For example, the viewing angle characteristic is measured in advance by the processing in Figs. 10 and 12, and the information on the viewing angle characteristic is stored. As a result, the correction unit 11 can perform correction using the viewing angle characteristic at the time of actual imaging. In particular, measurement is performed with a combination of the LED wall 505 and the camera 502 actually used for imaging, whereby correction can be performed using an optimal viewing angle characteristic at the time of imaging.

In the embodiments, the correction unit 11 obtains the relative angle of the camera 502 with respect to the LED wall 505 on the basis of the camera position/angle information CP, and sets the reciprocal value of the viewing angle characteristic according to the relative angle as the correction coefficient HK.

After the relative angle (angle $\theta$, $\varphi$) of the camera 502 with respect to the LED wall 505 is obtained, the reciprocal value of the viewing angle characteristic according to the relative angle is obtained, whereby the correction coefficient HK is obtained. As a result, it is possible to perform correction according to the position and the imaging angle of the camera 502 at that time.

In the embodiments, the storage unit 22 may store the correction coefficient HK. The correction unit 11 reads the correction coefficient according to the relative angle from the storage unit 22.

For example, the viewing angle characteristic is measured with a combination of the LED wall 505 and the camera 502, and the reciprocal value of the viewing angle characteristic according to the relative angle is stored in the storage unit 22. In that case, when the relative angle $\theta$ of the camera 502 with respect to the LED wall 505 is obtained in real time, the correction coefficient HK according to the relative angle $\theta$ can be read from the storage unit 22. As a result, the correction coefficient HK can be obtained by processing with a small calculation load.

In the embodiments, the correction unit 11 performs correction for each frame of the background video vB to be displayed on the LED wall 505 during a period in which the background video vB displayed on the LED wall 505 is imaged by the camera 502.

For example, the correction is performed for each frame of a video to be displayed on the display in real time during a period in which imaging is performed. Alternatively, the correction is performed for each frame of the imaged video vC in real time during the period in which the imaging is performed.

By performing correction in real time during executing imaging as described above, it is not necessary to perform correction according to the viewing angle characteristic in post-production or the like, and it is possible to improve the overall video production efficiency.

Note that, in a case where the configuration of the fifth embodiment is adopted, the relative angle and the mask MK obtained from the camera position/angle information CP may be stored as metadata in association with the frame of the imaged video vC without necessarily performing correction in real time. As a result, in the post-production, the mask MK is used to separate the portion of the background video vB, and further the relative angle is used to obtain the correction coefficient HK, whereby correction can be performed for canceling the shift in color and luminance.

Furthermore, the processing by the correction unit 11 described in the embodiments can be implemented by cloud computing.

For example, the background video vB or the imaged video vC, and the imaging information are transmitted to a cloud server. The cloud server side includes a configuration of the correction unit 11 and executes correction processing. Then, it is conceivable that the cloud server transmits the corrected background video vB or imaged video vC to the apparatus of the imaging system 500.

A program of the embodiments is a program for causing a processor, for example, a CPU, a DSP, or the like, or a device including the processor to execute the processing by the correction unit 11 as illustrated in Fig. 18 above.

That is, the program of the embodiments is a program for causing the information processing apparatus 70 to execute video correction processing using the correction coefficient HK generated on the basis of the relative angle between the camera 502 that images the background video vB displayed on the display such as the LED wall 505 and the LED wall 505, and the viewing angle characteristic of the LED wall 505.

With such a program, the information processing apparatus 70 that executes the above-described correction processing can be implemented by various computer apparatuses.

Such a program can be recorded in advance in an HDD as a recording medium built in a device such as a computer apparatus, a ROM in a microcomputer including a CPU, or the like. Furthermore, such a program can be temporarily or permanently stored (recorded) in a removable recording medium such as a flexible disk, a compact disc read only memory (CD-ROM), a magneto optical (MO) disk, a digital versatile disc (DVD), a Blu-ray Disc (registered trademark), a magnetic disk, a semiconductor memory, or a memory card. Such a removable recording medium can be provided as so-called package software.

Furthermore, such a program can be installed from the removable recording medium into a personal computer or the like, or can be downloaded from a downloading site via a network such as a local area network (LAN) or the Internet.

Furthermore, such a program is suitable for providing the information processing apparatus 70 of the embodiments in a wide range. For example, by downloading the program to a personal computer, a communication apparatus, a portable terminal apparatus such as a smartphone or a tablet, a mobile phone, a gaming device, a video device, a personal digital assistant (PDA), or the like, it is possible to cause these apparatuses to function as the information processing apparatus 70 of the present disclosure.

Note that the effects described in the present specification are merely examples and are not restrictive, and other effects may be exerted.

Note that the present technology can also adopt the following configurations.

(1) An information processing apparatus including
a correction unit that performs correction of a video by using a correction coefficient generated on the basis of a relative angle between a camera that images the video displayed on a display and the display, and a viewing angle characteristic of the display.

(2) The information processing apparatus according to (1), in which
the correction unit performs correction to cause a corrected video to be displayed on the display.

(3) The information processing apparatus according to (1) or (2),
having a rendering function of rendering video data to be supplied to the display, and correcting and outputting rendered video data by the correction unit.

(4) The information processing apparatus according to (1) or (2), in which
the correction unit corrects video data output from a rendering engine that renders video data to be supplied to the display.

(5) The information processing apparatus according to (1) or (2),

having a function of performing processing of distributing and supplying video data to each of a plurality of display panels, for the display including the plurality of display panels, in which
the correction unit corrects video data to be distributed and supplied to the display panels.

(6) The information processing apparatus according to (1) or (2),

having a luminance control function for a pixel of the display, in which
the correction unit corrects a control value of luminance of the pixel of the display.

(7) The information processing apparatus according to any of (1) to (6), in which
the correction unit corrects a video of an imaging region determined on the basis of imaging information on the camera in a video to be displayed on the display.

(8) The information processing apparatus according to (1), in which
the correction unit performs correction of video data imaged by the camera.

(9) The information processing apparatus according to (1), in which
the correction unit separates a background video and a foreground video from each other for video data imaged by the camera, performs correction on the background video, and combines the foreground video and corrected background video with each other.

(10) The information processing apparatus according to any of (1) to (9),
obtaining the viewing angle characteristic on the basis of information based on imaging performed for each of a display state and a non-display state of the display at a plurality of viewing angles with respect to the display by the camera, and performing storage processing for the viewing angle characteristic.

(11) The information processing apparatus according to any of (1) to (10), in which
the correction unit obtains the relative angle of the camera with respect to the display on the basis of position information on the camera, and sets a reciprocal value of the viewing angle characteristic according to the relative angle as the correction coefficient.

(12) The information processing apparatus according to any of (1) to (11), further including

a storage unit that stores the correction coefficient according to the relative angle of the camera with respect to the display, in which
the correction unit reads the correction coefficient according to the relative angle from the storage unit.

(13) The information processing apparatus according to any of (1) to (12), in which
the correction unit performs correction for each of frames of the video during a period in which the camera images the video displayed on the display.

(14) An information processing method in which

an information processing apparatus

performs correction of a video by using a correction coefficient generated on the basis of a relative angle between a camera that images the video displayed on a display and the display, and a viewing angle characteristic of the display.

(15) A program causing an information processing apparatus to execute

video correction processing using a correction coefficient generated on the basis of a relative angle between a camera that images the video displayed on a display and the display, and a viewing angle characteristic of the display.

REFERENCE SIGNS LIST

| 10 | Rendering unit |
|----|----------------|
| 11 | Correction unit |
| 12 | Combining unit |
| 20 | Shift amount calculation unit |
| 21 | Coefficient setting unit |
| 22 | Storage unit |
| 23 | WB adjustment unit |
| 24 | Correction calculation unit |
| 30 | Light emission control unit |
| 31 | LED driver |
| 41 | Background separation unit |
| 42 | Combining unit |
| 45 | Position detection unit |
| 70 | Information processing apparatus |
| 500 | Imaging system |
| 501 | Performance area |
| 502 | Camera |
| 505 | LED wall |
| 506 | LED panel |
| 520 | Rendering engine |
| 570 | LED processor |
| 590 | Display controller |

**Claims**

1. An information processing apparatus comprising
a correction unit that performs correction of a video by using a correction coefficient generated on a basis of a relative angle between a camera that images the video displayed on a display and the display, and a viewing angle characteristic of the display.

2. The information processing apparatus according to claim 1, wherein
the correction unit performs correction to cause a corrected video to be displayed on the display.

3. The information processing apparatus according to claim 1,
having a rendering function of rendering video data to be supplied to the display, and correcting and outputting rendered video data by the correction unit.

4. The information processing apparatus according to claim 1, wherein
the correction unit corrects video data output from a rendering engine that renders video data to be supplied to the display.

5. The information processing apparatus according to claim 1,

having a function of performing processing of distributing and supplying video data to each of a plurality of display panels, for the display including the plurality of display panels, wherein

the correction unit corrects video data to be distributed and supplied to the display panels.

6. The information processing apparatus according to claim 1,

having a luminance control function for a pixel of the display, wherein
the correction unit corrects a control value of luminance of the pixel of the display.

7. The information processing apparatus according to claim 1, wherein
the correction unit corrects a video of an imaging region determined on a basis of imaging information on the camera in a video to be displayed on the display.

8. The information processing apparatus according to claim 1, wherein
the correction unit performs correction of video data imaged by the camera.

9. The information processing apparatus according to claim 1, wherein
the correction unit separates a background video and a foreground video from each other for video data imaged by the camera, performs correction on the background video, and combines the foreground video and corrected background video with each other.

10. The information processing apparatus according to claim 1,
obtaining the viewing angle characteristic on a basis of information based on imaging performed for each of a display state and a non-display state of the display at a plurality of viewing angles with respect to the display by the camera, and performing storage processing for the viewing angle characteristic.

11. The information processing apparatus according to claim 1, wherein
the correction unit obtains the relative angle of the camera with respect to the display on a basis of position information on the camera, and sets a reciprocal value of the viewing angle characteristic according to the relative angle as the correction coefficient.

12. The information processing apparatus according to claim 1, further comprising

a storage unit that stores the correction coefficient according to the relative angle of the camera with respect to the display, wherein
the correction unit reads the correction coefficient according to the relative angle from the storage unit.

13. The information processing apparatus according to claim 1, wherein
the correction unit performs correction for each of frames of the video during a period in which the camera images the video displayed on the display.

14. An information processing method wherein

an information processing apparatus
performs correction of a video by using a correction coefficient generated on a basis of a relative angle between a camera that images the video displayed on a display and the display, and a viewing angle characteristic of the display.

15. A program causing an information processing apparatus to execute
video correction processing using a correction coefficient generated on a basis of a relative angle between a camera that images the video displayed on a display and the display, and a viewing angle characteristic of the display.

FIG. 1

FIG. 2

EP 4 496 303 A1

# FIG. 3

EP 4 496 303 A1

## FIG. 4

ST1

Asset Creation

ST2

Production

ST3

Post-Production

EP 4 496 303 A1

FIG. 5

# FIG. 6

START

ACQUIRE 3D BACKGROUND DATA — S10

DISPLAY IS ENDED? — S20

Yes

No

ACQUIRE IMAGING INFORMATION — S30

PERFORM RENDERING BASED ON IMAGING INFORMATION — S40

COMBINE ENTIRE BACKGROUND VIDEO WITH CAMERA VIEWPOINT VIDEO — S50

GENERATE/OUTPUT VIDEO FOR INDIVIDUAL LED PANEL — S60

END

# FIG. 7

EP 4 496 303 A1

# FIG. 8

```
   71              72              73              74
   CPU            ROM            RAM          NONVOLATILE
                                              MEMORY UNIT
```

83

75 INPUT/
OUTPUT
I/F

INPUT UNIT — 76

VIDEO 85
PROCESSING UNIT

DISPLAY UNIT — 77

AUDIO
OUTPUT UNIT — 78

70

STORAGE UNIT — 79

COMMUNICATION
SECTION — 80

DRIVE

REMOVABLE
RECORDING — 82
MEDIUM

81

# FIG. 9

vB

505

502

vC

FRONT
DIRECTION

θ

−90    0    +90

# FIG. 10

START

| | |
|---|---|
| TURN OFF ALL R, G, AND B PIXELS | S101 |

| | |
|---|---|
| PERFORM IMAGING AT EACH CAMERA POSITION, AND STORE SIGNAL LEVEL OF EACH PIXEL | S102 |

| | |
|---|---|
| TURN ON ALL R PIXELS AND TURN OFF G AND B PIXELS | S103 |

| | |
|---|---|
| PERFORM IMAGING AT EACH CAMERA POSITION, AND STORE SIGNAL LEVEL OF EACH PIXEL | S104 |

| | |
|---|---|
| CALCULATE/STORE CHARACTERISTICS FOR R PIXELS | S105 |

| | |
|---|---|
| TURN ON ALL G PIXELS AND TURN OFF R AND B PIXELS | S106 |

| | |
|---|---|
| PERFORM IMAGING AT EACH CAMERA POSITION, AND STORE SIGNAL LEVEL OF EACH PIXEL | S107 |

| | |
|---|---|
| CALCULATE/STORE CHARACTERISTICS FOR G PIXELS | S108 |

| | |
|---|---|
| TURN ON ALL B PIXELS AND TURN OFF R AND G PIXELS | S109 |

| | |
|---|---|
| PERFORM IMAGING AT EACH CAMERA POSITION, AND STORE SIGNAL LEVEL OF EACH PIXEL | S110 |

| | |
|---|---|
| CALCULATE/STORE CHARACTERISTICS FOR B PIXELS | S111 |

END

FIG. 11

EP 4 496 303 A1

# FIG. 12

```
                    ┌──────────────┐
                    │    START     │
                    └──────────────┘
                            │
        ┌───────────────────────────────────┐
        │        TURN ON ALL PIXELS         │   S121
        └───────────────────────────────────┘
                            │
        ┌───────────────────────────────────┐
        │         PERFORM IMAGING AT        │
        │     EACH CAMERA POSITION, AND     │   S122
        │  STORE SIGNAL LEVEL OF EACH PIXEL │
        └───────────────────────────────────┘
                            │
        ┌───────────────────────────────────┐
        │          TURN OFF PIXELS          │   S123
        └───────────────────────────────────┘
                            │
        ┌───────────────────────────────────┐
        │         PERFORM IMAGING AT        │
        │     EACH CAMERA POSITION, AND     │   S124
        │  STORE SIGNAL LEVEL OF EACH PIXEL │
        └───────────────────────────────────┘
                            │
        ┌───────────────────────────────────┐
        │          CALCULATE/STORE          │   S125
        │          CHARACTERISTICS          │
        └───────────────────────────────────┘
                            │
                    ┌──────────────┐
                    │     END      │
                    └──────────────┘
```

# FIG. 13

nD ←

nD ←

nD ←

Display Controller — 590

vB

COMBINING UNIT — 12

vBCa

vB(df)

CORRECTION UNIT — 11

vBC    CP

IMAGING INFORMATION →

RENDERING UNIT — 10

— 520

Rendering Engine

# FIG. 14

# FIG. 15

## FIG. 16

*FIG. 17*

A

AVERAGE VALUE

LEVEL WHEN PIXELS ARE ALL TURNED ON –
LEVEL WHEN PIXELS ARE TURNED OFF

-90°    0°    +90°
ANGLE θ

B

AVERAGE VALUE

ONE TIMES
CORRECTION VALUE

-90°    0°    +90°
ANGLE θ

# FIG. 18

```
          ┌─────────────────┐
          │     START       │
          └─────────────────┘
                   │
          ┌─────────────────┐
          │ INPUT ONE FRAME │         S201
          └─────────────────┘
                   │
      ┌──────────►│
      │   ┌─────────────────────┐
      │   │     DETERMINE       │      S202
      │   │ TARGET PIXEL/PIXEL BLOCK │
      │   └─────────────────────┘
      │            │
      │   ┌─────────────────────┐
      │   │ INPUT CAMERA POSITION/ │   S203
      │   │  ANGLE INFORMATION  │
      │   └─────────────────────┘
      │            │
      │   ┌─────────────────────┐
      │   │ CALCULATE RELATIVE ANGLE │  S204
      │   └─────────────────────┘
      │            │
      │   ┌─────────────────────┐
      │   │ SET CORRECTION COEFFICIENT │ S205
      │   └─────────────────────┘
      │            │
      │   ┌─────────────────────┐
      │   │      PERFORM        │      S206
      │   │ CORRECTION CALCULATION │
      │   └─────────────────────┘
      │            │
      │  No   ╱─────────────────╲
      └──────⟨   PROCESSING IS    ⟩    S207
             ⟨ ENDED FOR ALL PIXELS ⟩
             ╲  OF ONE FRAME?   ╱
              ╲───────────────╱
                   │ Yes
          ┌─────────────────┐
          │      END        │
          └─────────────────┘
```

# FIG. 19

nD ←

nD ←

nD ←

**Display Controller** 〜 590

vB

**COMBINING UNIT** 12 〜

vBCa

**CORRECTION UNIT** 11 〜

vB(df)

CP    vBC

IMAGING INFORMATION →

**Rendering Engine** 〜 520

# FIG. 20

11

nD ←

nD ←

CORRECTION UNIT

nD ←

Display Controller

590

IMAGING INFORMATION

vB

IMAGING INFORMATION →

Rendering Engine

520

# FIG. 21

570

LED Processer

506

LED PANEL

LED DRIVER

31

LIGHT EMISSION CONTROL UNIT

CORRECTION CALCULATION UNIT

24

30

nD

HK

STORAGE UNIT

22

COEFFICIENT SETTING UNIT

21

RELATIVE ANGLE CALCULATION UNIT

20

11

CORRECTION UNIT

CP

IMAGING INFORMATION

## FIG. 22

CORRECTION UNIT ... 11

BACKGROUND SEPARATION UNIT ... 41

CORRECTION CALCULATION UNIT ... 24

COMBINING UNIT ... 42

WB ADJUSTMENT UNIT ... 23

COEFFICIENT SETTING UNIT ... 21

RELATIVE ANGLE CALCULATION UNIT ... 20

STORAGE UNIT ... 22

POSITION DETECTION UNIT ... 45

vC → BACKGROUND SEPARATION UNIT → ARb → CORRECTION CALCULATION UNIT → COMBINING UNIT → vCa

HK

CP

MK

ARf

EP 4 496 303 A1

48

## FIG. 23

ARb (vB)    ARf (510)    vC

## FIG. 24

MK

# FIG. 25

EP 4 496 303 A1

A

| X-RAY | ULTRAVIOLET RAY | VISIBLE LIGHT | NEAR-INFRARED RAY | MID-INFRARED RAY | FAR-INFRARED RAY |
|---|---|---|---|---|---|

RGB CAMERA  380nm $\longleftrightarrow$ 780nm

SWIR CAMERA  400nm $\longleftrightarrow$ 1700mm

IR CAMERA  800nm $\longleftrightarrow$ 900nm

B

# FIG. 26

502

50

53

SWIR
CAMERA        Pswir

MASK
GENERATION
UNIT

MK

vC

RGB
CAMERA

51

52

Prgb

# FIG. 27

A

505

501

B

505

600
600
600
600
600

501

# EP 4 496 303 A1

<table>
<tr><td colspan="2" align="center"><strong>INTERNATIONAL SEARCH REPORT</strong></td><td>International application No.<br><br><strong>PCT/JP2023/005312</strong></td></tr>
</table>

**A.    CLASSIFICATION OF SUBJECT MATTER**

*H04N 5/272*(2006.01)i; *G06T 3/00*(2006.01)i; *H04N 5/66*(2006.01)i; *H04N 23/60*(2023.01)i
FI:   H04N5/272; G06T3/00; H04N5/66 A; H04N23/60 500

According to International Patent Classification (IPC) or to both national classification and IPC

**B.    FIELDS SEARCHED**

Minimum documentation searched (classification system followed by classification symbols)

    H04N5/272; G06T3/00; H04N5/66; H04N23/60

Documentation searched other than minimum documentation to the extent that such documents are included in the fields searched

    Published examined utility model applications of Japan 1922-1996
    Published unexamined utility model applications of Japan 1971-2023
    Registered utility model specifications of Japan 1996-2023
    Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | CN 113556443 A (BEIJING XINGGUANG FILM & TV EQUIPMENT TECHNOLOGIES CO., LTD.) 26 October 2021 (2021-10-26)<br>paragraphs [0001], [0003], [0010]-[0013], [0023], [0029], [0032]-[0035], [0037] | 1-4, 6-7, 11-15 |
| A | | 5, 8-10 |
| X | WO 2017/170710 A1 (MITSUBISHI ELECTRIC CORP.) 05 October 2017 (2017-10-05)<br>paragraphs [0011], [0012], [0015], [0018], [0024], [0027]-[0030], [0198], fig. 1-3 | 1-2, 5-6, 11-12, 14-15 |
| A | | 3-4, 7-10, 13 |

☐ Further documents are listed in the continuation of Box C.    ☑ See patent family annex.

| | |
|---|---|
| *   Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **24 April 2023** | **09 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/005312**

| Patent document cited in search report | | | Publication date (day/month/year) | Patent family member(s) | Publication date (day/month/year) |
|---|---|---|---|---|---|
| CN | 113556443 | A | 26 October 2021 | (Family: none) | |
| WO | 2017/170710 | A1 | 05 October 2017 | (Family: none) | |

Form PCT/ISA/210 (patent family annex) (January 2015)

## EP 4 496 303 A1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200145644 A